Europäisches Patentamt

European Patent Office

Office européen des brevets

(19)

(11) EP 1 534 016 A2

(12) **EUROPEAN PATENT APPLICATION**

(43) Date of publication:
25.05.2005 Bulletin 2005/21

(51) Int Cl.$^7$: **H04N 7/26**

(21) Application number: 04027253.6

(22) Date of filing: 17.11.2004

(84) Designated Contracting States:
AT BE BG CH CY CZ DE DK EE ES FI FR GB GR
HU IE IS IT LI LU MC NL PL PT RO SE SI SK TR
Designated Extension States:
AL HR LT LV MK YU

(30) Priority: 21.11.2003 JP 2003391847

(71) Applicant: MATSUSHITA ELECTRIC INDUSTRIAL
CO., LTD.
Kadoma-shi, Osaka 571-8501 (JP)

(72) Inventors:
• Sugio, Toshiyasu
  Osaka city, Osaka 538-0042 (JP)
• Nishi, Takahiro
  Ikoma city Nara 630-0137 (JP)
• Horiike, Kazuyoshi
  Fushimi-ku, Kyoto city, Kyoto 612-8421 (JP)

(74) Representative: Eisenführ, Speiser & Partner
Patentanwälte Rechtsanwälte
Postfach 10 60 78
28060 Bremen (DE)

(54) **Using motion vectors and the occurrence of coefficient quantization levels to drive a noise removal image postprocessing**

(57)     An image signal processing method, an image signal processing device and an image signal processing program are provided for performing post-processing, independently of the specification of a decoder. A coding parameter estimation portion estimates a quantization parameter, a picture type and a motion vector that were used for coding by using a decoded image entered from a decoding portion. The estimated quantization parameter or the like is sent to a post-processing portion. The post-processing portion performs the post-processing by using the entered quantization parameter, picture type and motion vector for eliminating block noise or mosquito noise.

*Fig. 1*

**Description**

BACKGROUND OF THE INVENTION

1. Field of the Invention

The present invention relates to an image signal processing method, an image signal processing device, an image signal processing program and an integrated circuit device. More specifically, the present invention relates to an image signal processing method, an image signal processing device, an image signal processing program and an integrated circuit device for improving the image quality of a decoded image of a block-by-block compressed and coded image.

2. Description of the Prior Art

Recently, as a high efficiency compressing and coding method of images in the broadcasting or storage fields, an MPEG (Moving Picture Experts Group) method is widely used. The MPEG method realizes coding of an image by reducing spatial and temporal redundancy of the image. Picture types in the MPEG method are roughly divided into two images; one is an intra-frame coded image that is coded by utilizing a spatial dependence, and the other is an inter-frame coded image that is coded by utilizing a temporal dependence. The intra-frame coded image reduces the spatial redundancy by processing DCT and quantization on pixel values in a frame as variable length coding. In contrast, the inter-frame coded image reduces temporal redundancy for improving coding efficiency by processing DCT, quantization and variable length coding on differential values between an image to be processed for coding and a previous image.

Usually, the MPEG method has the disadvantage that low transmission bit rate (high compression ratio) in which the quantity of information is reduced substantially causes increase of conspicuous coding noise and deterioration of image quality. Typical coding noise includes a block noise (also referred to as a block distortion) and a mosquito noise (also referred to as a ringing noise or a corona noise).

The block noise is a phenomenon in which a boundary between blocks is viewed like tiles. This noise is caused by a variance of low frequency components between neighboring blocks and a lack of high frequency components.

The mosquito noise is a phenomenon in which noises are viewed as if mosquitoes are flying in the vicinity of edges of objects. This noise is caused by a lack of high frequency components within a block.

The block noise and the mosquito noise are noticeable in deterioration of the image quality, so these types of noise are usually removed after decoding. In general, processing for removing noise from a decoded image is called a post-processing.

There are some conventional techniques of the post-processing method for removing the block noise and the mosquito noise (for example, see Japanese unexamined patent publications No. 2003-18600 and No. 2002-330436, and Japanese unexamined publication (PCT) No. 2001-510952).

Japanese unexamined patent publication No. 2003-18600 describes a method in which, for a decoded image, a low pass filter and a high pass filter are switched in accordance with a quantization parameter that was used for coding. Thus, the block noise and the mosquito noise that are generated in the decoded image are reduced, and contours of the decoded image are emphasized.

Japanese unexamined publication (PCT) No. 2001-510952 describes a method in which a filter process is changed in accordance with a picture type in the MPEG method, so that the block noise and the mosquito noise are reduced.

Japanese unexamined patent publication No. 2002-330436 describes a method in which a block distortion is determined by checking whether neighboring blocks have similar motion vectors or not, and the block distortion is removed by adapting filtering.

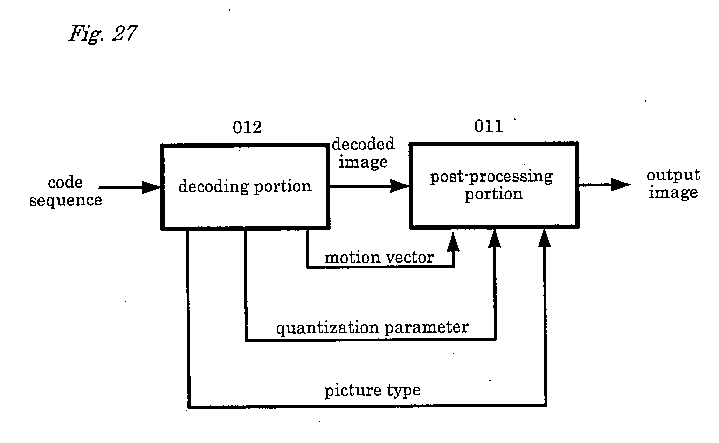

Fig. 27 shows a block diagram for embodying the conventional methods described above. In Fig. 27, a decoding portion 012 decodes an entered code sequence and sends coding parameters including a decoded image, a motion vector, a quantization parameter and a picture type to the post-processing portion 011. The post-processing portion 011 performs the post-processing for the entered decoded image by using the coding parameters so as to generate an output image.

In the conventional methods described above, the post-processing portion 011 has to receive the coding parameters including the quantization parameter, the picture type and the motion vector from the decoding portion 012. However, if the coding parameters cannot be obtained from the decoding portion 012, the post-processing portion 011 cannot perform the noise reduction as described above. For example, when a post-processing portion is being added to a decoder (that is already developed) so as to improve the image quality of a reproduced image, there may be the problem that the coding parameters cannot be transmitted because of a difference in specification between the decoder and the post-processing portion.

SUMMARY OF THE INVENTION

An object of the present invention is to provide an image signal processing method, an image signal processing device, an image signal processing program and an integrated circuit device that can perform post-processing independently of the specifications of decoders.

The image signal processing method according to a first aspect of the present invention is an image signal processing method for performing post-processing for a decoded image obtained by decoding a code sequence. The code sequence is generated by coding an image signal by using a method including orthogonal transformation and quantization. The image signal processing method includes a coding parameter estimation step and a post-processing step. The coding parameter estimation step is for estimating coding parameters that were used for coding from the decoded image. The post-processing step is for performing the post-processing for the decoded image by using the estimated coding parameters.

Here, the method including orthogonal transformation and quantization for coding the image signal can be, for example, a coding method such as H.261, H.263, MPEG1, MPEG2, MPEG4, H.264/AVC or the like, but it can be other methods and is not limited to them. In this case, the orthogonal transformation can be, for example, a discrete cosine transformation (DCT), a Walsh-Hadamard transformation (WHT), a discrete Fourier transformation (DFT), a discrete sine transformation (DST), a Haar transformation, a slant transformation, Karhunen-Loeve Transformation (KLT), a wavelet transformation, or the like.

In addition, the post-processing is an image processing that is performed for a decoded image before the decoded image is displayed or before the decoded image is stored in a memory or the like, for example. More specifically, the post-processing is, for example, a process for reducing coding noise such as a block noise or a mosquito noise, a frame rate conversion of the decoded image, an image size conversion, a temporal and spatial resolution conversion process such as an interlace progressive conversion (IP conversion), or the like. Note that the specific contents of this post-processing can be a process recommended in the above-mentioned standards, for example, a deblocking and filtering process recommended in H.264/AVC.

According to the image signal processing method of a second aspect of the present invention, the estimated coding parameters include at least one of a quantization parameter that was used for the quantization, a picture type of the decoded image and a motion vector of the decoded image.

Here, the quantization parameter is, for example, a value called a quantization scale or the like, which is used for determining a quantization step size. The picture type indicates a coding system such as an intra-frame coded image or an inter-frame coded image, for example. The motion vector is information for indicating which position of a pixel is referred to for inter-frame coding.

According to the image signal processing method of a third aspect of the present invention, the estimated coding parameters include the quantization parameter. The coding parameter estimation step includes estimating the quantization parameter in accordance with an occurrence frequency of each level in orthogonal transformation coefficients of the decoded image.

Here, the level in the orthogonal transformation coefficients means, for example, a value of the orthogonal transformation coefficient itself or the like.

According to the image signal processing method of a fourth aspect of the present invention, the coding parameter estimation step includes estimating the quantization parameter by using a level having the highest occurrence frequency in the orthogonal transformation coefficients.

According to the image signal processing method of a fifth aspect of the present invention, the estimated coding parameters include the picture type. The coding parameter estimation step includes estimating the picture type by comparing the occurrence frequency of each level in the orthogonal transformation coefficients of the decoded image with the occurrence frequency of each level in the orthogonal transformation coefficients of a previous decoded image.

According to the image signal processing method of a sixth aspect of the present invention, the estimated coding parameters include the quantization parameter and the picture type. The coding parameter estimation step includes switching between estimation methods for estimating the quantization parameter in accordance with the picture type.

According to the image signal processing method of a seventh aspect of the present invention, the estimated coding parameters include the picture type and the motion vector. The coding parameter estimation step includes switching between estimation methods for estimating the motion vector in accordance with the picture type.

According to the image signal processing method of an eighth aspect of the present invention, the estimated coding parameters include the quantization parameter, the picture type and the motion vector. The coding parameter estimation step includes switching between estimation methods for estimating the quantization parameter in accordance with the picture type and magnitude of the motion vector.

According to the image signal processing method of a ninth aspect of the present invention, the estimated coding parameters include the quantization parameter and the picture type. The coding parameter estimation step includes estimating the quantization parameter in accordance with the distribution of orthogonal transformation coefficients of the decoded image if the picture type is an intra-frame coded image.

According to the image signal processing method of a tenth aspect of the present invention, the estimated coding parameters include the quantization parameter, the picture type and the motion vector. The coding parameter estimation step includes estimating the quantization parameter in accordance with the distribution of orthogonal transformation coefficients of a differential image that is generated by using the decoded image, a previous decoded image and the motion vector if the picture type is an inter-frame coded image.

According to the image signal processing method of an eleventh aspect of the present invention, the estimated coding parameters include the motion vector. The coding parameter estimation step includes estimating a candidate motion vector which is a motion vector that is a candidate as the motion vector, if an occurrence frequency of each level in orthogonal transformation coefficients of a differential image has periodical peaks. The differential image is generated by using the decoded image, a previous decoded image and the candidate motion vector.

According to the image signal processing method of a twelfth aspect of the present invention, the estimated coding parameters include the quantization parameter and the picture type. The coding parameter estimation step includes switching among estimation methods for estimating the quantization parameter in accordance with the picture type and a motion quantity that is determined by the decoded image and previous decoded image.

Here, the motion quantity means, for example, a value determined in accordance with SAD (Sum of Absolute Differences) or SSD (Sum of Square Differences) between the decoded image and a previous image.

According to the image signal processing method of a thirteenth aspect of the present invention, the post-processing includes a process for eliminating a block noise by using the estimated coding parameters.

According to the image signal processing method of a fourteenth aspect of the present invention, the post-processing includes a process for eliminating a mosquito noise by using the estimated coding parameters.

An image signal processing device according to a fifteenth aspect of the present invention is an image signal processing device for performing post-processing for a decoded image obtained by decoding a code sequence. The code sequence is generated by coding an image signal by using a method including orthogonal transformation and quantization. The device includes a coding parameter estimation unit and a post-processing unit. The coding parameter estimation unit estimates coding parameters that were used for coding from the decoded image. The post-processing unit performs the post-processing for the decoded image by using the estimated coding parameters.

According to the image signal processing device of a sixteenth aspect of the present invention, the coding parameter estimation unit includes an orthogonal transformation unit and a memory unit. The orthogonal transformation unit performs an orthogonal transformation for the decoded image. The memory unit stores orthogonal transformation coefficients of the decoded image.

The image signal processing program according to a seventeenth aspect of the present invention is an image signal processing program for a computer to execute an image signal processing method for performing post-processing for a decoded image obtained by decoding a code sequence. The code sequence is generated by coding an image signal by using a method including orthogonal transformation and quantization. The image signal processing program makes the computer execute the image signal processing method including a coding parameter estimation step and a post-processing step. The coding parameter estimation step is for estimating coding parameters that were used for coding from the decoded image. The post-processing step is for performing the post-processing for the decoded image by using the estimated coding parameters.

An integrated circuit device according to an eighteenth aspect of the present invention is an integrated circuit device for performing post-processing for a decoded image obtained by decoding a code sequence. The code sequence is generated by coding an image signal by using a method including orthogonal transformation and quantization. The device includes a coding parameter estimation circuit and a post-processing circuit. The coding parameter estimation circuit estimates coding parameters that were used for coding from the decoded image. The post-processing circuit performs the post-processing for the decoded image by using the estimated coding parameters.

The first aspect of the present invention has the effect that the post-processing can be performed independently of decoders in the post-processing step by using the coding parameters estimated in the coding parameter estimation step. Namely, even if the coding parameters cannot be obtained from the decoders directly in the post-processing step, noise of the decoded image can be reduced independently of the specifications of the decoders.

The second aspect of the present invention has the effect that noise generated in the decoded image can be reduced by performing the post-processing method independently from the decoder; the post-processing method uses the quantization parameter as shown in Japanese unexamined patent publications No. 2003-18600, the picture type as shown in Japanese unexamined publication (PCT) No. 2001-510952, or the motion vector as shown in Japanese unexamined patent publication No. 2002-330436.

The third or the fourth aspect of the present invention has the effect that noise of the decoded image can be eliminated by a noise elimination method using the quantization parameter after estimating the quantization parameter from the level of the DCT coefficients having the highest occurrence frequency in a distribution of the orthogonal transformation coefficients of the decoded image.

The fifth aspect of the present invention has the effect that an inter-frame coded image, inheriting a feature of the intra-frame coded image because of a small motion, can be estimated correctly by comparing orthogonal transformation coefficients between the present decoded image and the previous decoded image. Thus the estimation of a picture type can be performed with high precision.

The sixth aspect of the present invention has the effect that the estimation methods of the quantization parameter can be switched in accordance with the picture type of the decoded image. Thus the quantization parameter can be estimated in accordance with each feature of the intra-frame coded image and the inter-frame coded image.

The seventh aspect of the present invention has the effect that the amount of processing necessary for block matching can be reduced because whether a motion vector existed or not can be decided in accordance with a picture type of the decoded image.

The eighth aspect of the present invention has the effect that a more appropriate quantization parameter can be estimated because the estimation methods of the quantization parameter can be switched in accordance with a picture type of the decoded image or magnitude of the motion vector.

The ninth aspect of the present invention has the effect that the quantization parameter can be estimated from the phenomenon in which, for example, a peak of occurrence frequency in a distribution of the orthogonal transformation coefficients of the decoded image becomes periodic in the case of intra-frame coding.

The tenth aspect of the present invention has the effect that the quantization parameter can be estimated in the case of an inter-frame coded image similarly to the case of an intra-frame coding from the phenomenon in which a peak of occurrence frequency in a distribution of the orthogonal transformation coefficients of the decoded image becomes periodic by the orthogonal transformation of a differential image between the decoded image and the previous decoded image.

The eleventh aspect of the present invention has the effect that the motion vector can be estimated with high precision by repeating detection of the motion vector until periodical peaks appear in the distribution of its occurrence of the orthogonal transformation coefficients of the differential image that is generated by using the estimated motion vector.

The twelfth aspect of the present invention has the effect that the block matching or the like can be omitted for reducing the amount of processing because the motion quantity is determined from a difference between the decoded image and the previous decoded image.

The thirteenth aspect of the present invention has the effect that deterioration of the image quality of the decoded image can be reduced because the block noise can be eliminated independently of the decoder by using the estimated coding parameters.

The fourteenth aspect of the present invention has the effect that deterioration of the image quality of the decoded image can be reduced because the mosquito noise can be eliminated independently of the decoder by using the estimated coding parameters.

The fifteenth aspect of the present invention has the effect that the post-processing portion can perform the post-processing independently of the decoder by using coding parameters estimated by the coding parameter estimation portion. Namely, even if the post-processing portion cannot obtain the coding parameters directly from the decoder, noise of the decoded image can be reduced independently of the specification of the decoder.

The sixteenth aspect of the present invention has the effect that the coding parameters can be estimated by using the orthogonal transformation coefficients of the decoded image stored in the memory. Thus the present invention can use more appropriate coding parameters for the post-processing.

The seventeenth aspect of the present invention has the effect that the post-processing can be performed independently of the decoder in the post-processing step by using the coding parameters estimated in the coding parameter estimation step. Namely, noise of the decoded image can be reduced independently of the specification of the decoder, even if the coding parameters cannot be obtained directly from the decoder in the post-processing step.

The eighteenth aspect of the present invention has the effect that the post-processing circuit can perform the post-processing independently of the decoder by using the coding parameters estimated by the coding parameter estimation circuit. Namely, even if the post-processing circuit cannot obtain the coding parameters directly from the decoder, noise of the decoded image can be reduced independently of the specification of the decoder.

BRIEF DESCRIPTION OF THE DRAWINGS

Fig. 1 is a block diagram of a first embodiment of the present invention.

Fig. 2 is a block diagram of a coding parameter estimation portion in the first embodiment of the present invention.

Fig. 3 is a graph showing the occurrence frequency of DCT coefficients in an intra-frame coded image of a picture type estimation method in the first embodiment of the present invention.

Fig. 4 is a graph showing the occurrence frequency of DCT coefficients in an inter-frame coded image of the picture type estimation method in the first embodiment of the present invention.

Fig. 5 is a flowchart of the picture type estimation method in the first embodiment of the present invention.

Fig. 6 is a flowchart of the method for estimating the quantization parameter in the first embodiment of the present invention.

Fig. 7 is a flowchart of the method for estimating the quantization parameter of an intra-frame coded image in the first embodiment of the present invention. Fig. 8 is a flowchart of the method for estimating the quantization parameter of an inter-frame coded image in the first embodiment of the present invention. Fig. 9 is a graph showing motion quantity corresponding to magnitude of a motion vector of the method for estimating the quantization parameter of an inter-frame coded image in the first embodiment of the present invention.

Fig. 10 is a block diagram of a coding parameter estimation portion in a second embodiment of the present invention.

Fig. 11 is a flowchart of the quantization parameter estimation method in the second embodiment of the present invention.

Fig. 12 is a block diagram of a third embodiment of the present invention.

Fig. 13 is a block diagram of the coding parameter estimation portion in the third embodiment of the present invention.

Fig. 14 is a flowchart of the method for estimating the quantization parameter in the third embodiment of the present invention.

Fig. 15 is a block diagram of the coding parameter estimation portion in a fourth embodiment of the present invention.

Fig. 16 is a flowchart of the method for estimating the quantization parameter in the fourth embodiment of the present invention.

Fig. 17 is a block diagram of a fifth embodiment of the present invention.

Fig. 18 is a block diagram of the coding parameter estimation portion in the fifth embodiment of the present invention.

Fig. 19 is a block diagram of a sixth embodiment of the present invention.

Fig. 20 is a block diagram of the coding parameter estimation portion in the sixth embodiment of the present invention.

Fig. 21 is a block diagram of a seventh embodiment of the present invention.

Fig. 22 is a block diagram of the coding parameter estimation portion in the seventh embodiment of the present invention.

Fig. 23 is a block diagram of an overall structure of a contents supplying system.

Fig. 24 shows an example of a cellular phone equipped with a moving image coding device according to the present invention.

Fig. 25 is a block diagram of the structure of a cellular phone.

Fig. 26 shows an example of a digital broadcasting system.

Fig. 27 is a block diagram of conventional post-processing.

## DESCRIPTION OF THE PREFERRED EMBODIMENTS

Hereinafter, embodiments of the present invention will be described with reference to the attached drawings. In these embodiments, a code sequence of an image generated by MPEG-4 is exemplified.

(First Embodiment)

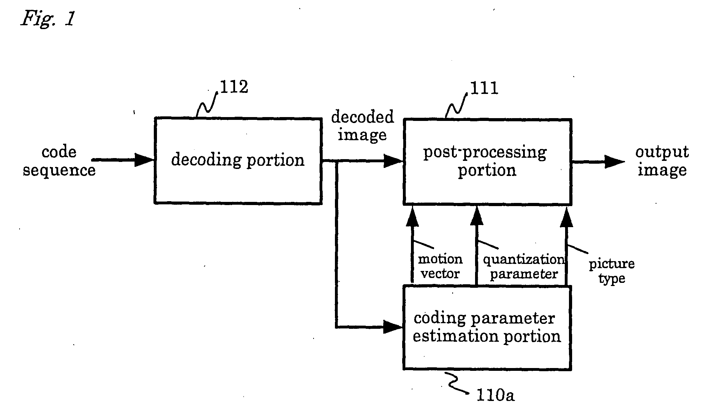

Fig. 1 is a block diagram of a first embodiment of the present invention, which includes a coding parameter estimation portion 110a, a post-processing portion 111 and a decoding portion 112. This structure is different from the conventional one shown in Fig. 27 in that it includes the coding parameter estimation portion 110a and coding parameters are not delivered from the decoding portion 112.

The decoding portion 112 decodes a code sequence that has been entered (or "entered code sequence") and delivers the decoded image to the coding parameter estimation portion 110a and the post-processing portion 111.

The coding parameter estimation portion 110a receives the decoded image as an input from the decoding portion 112 and estimates a quantization parameter that was used for coding, a picture type and a motion vector from the decoded image that has been received. The estimated quantization parameter, picture type and motion vector are delivered to the post-processing portion 111.

The post-processing portion 111 eliminates block noise from the decoded image that was received from the decoding portion 112 by the conventional method using the quantization parameter, the picture type and the motion vector that were received from the coding parameter estimation portion 110a.

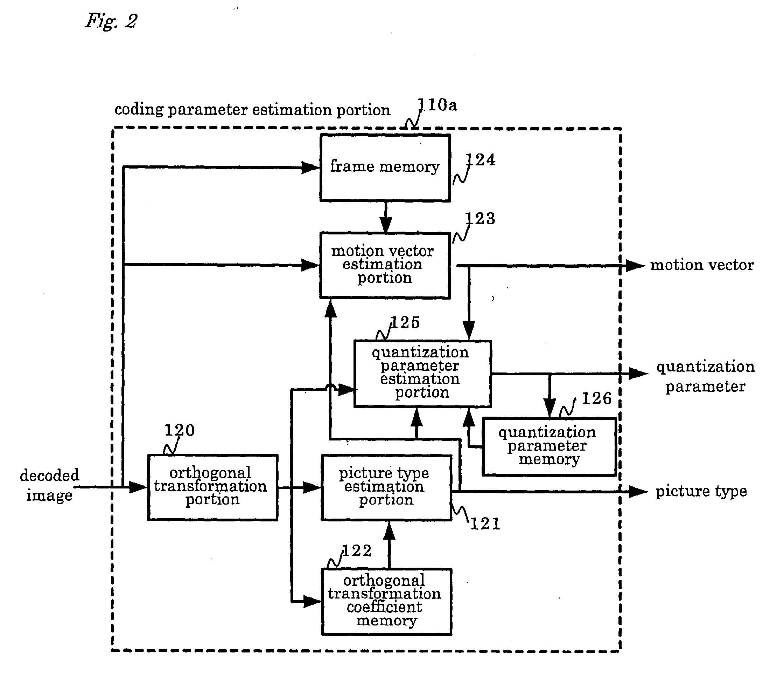

Next, the structure of the coding parameter estimation portion 110a in the first embodiment will be described. Fig. 2 is a block diagram that shows the internal structure of the coding parameter estimation portion 110a. As shown in Fig. 2, the coding parameter estimation portion 110a includes an orthogonal transformation portion 120 for performing a discrete cosine transform (DCT), a picture type estimation portion 121 for estimating a picture type of the decoded image, an orthogonal transformation coefficient memory 122 for storing DCT coefficients of the previous decoded image, a motion vector estimation portion 123 for estimating a motion vector, a frame memory 124 for storing the previous decoded image, a quantization parameter estimation portion 125 for estimating a quantization parameter, and a quantization parameter memory 126 for storing a previous quantization parameter.

Next, the operation of the coding parameter estimation portion 110a will be described. First, the orthogonal transformation portion 120 performs the DCT for'the decoded image that has been received from the decoding portion 112 and sends the orthogonal transformation coefficients to the picture type estimation portion 121, the quantization parameter estimation portion 125 and the orthogonal transformation coefficient memory 122. Next, the picture type estimation portion 121 receives the DCT coefficients of a previous decoded image from the orthogonal transformation coefficient memory 122 and estimates a picture type of the decoded image in accordance with a first predetermined method (that we will describe later). Then, the picture type estimation portion 121 sends the estimated picture type to the motion vector estimation portion 123, the quantization parameter estimation portion 125 and the post-processing portion 111. The orthogonal transformation coefficient memory 122 receives the DCT coefficients of the decoded image from the orthogonal transformation portion 120 and stores it in the memory.

Next, the motion vector estimation portion 123 uses the previous decoded image received from the frame memory 124, the present decoded image received from the decoding portion 112 and the picture type received from the picture type estimation portion 121 so as to estimate the motion vector in accordance with a second predetermined method (that will be described later). The estimated motion vector is sent to the quantization parameter estimation portion 125 and the post-processing portion 111. The frame memory 124 receives the present decoded image from the decoding portion 112 and stores it in a memory.

The quantization parameter estimation portion 125 uses the entered DCT coefficients of the decoded image, the picture type, the motion vector and the quantization parameter estimated from the previous decoded image so as to estimate the quantization parameter in accordance with a third predetermined method (that will be described later). The quantization parameter is delivered to the quantization parameter memory 126 and the post-processing portion 111. The quantization parameter memory 126 stores a value of the quantization parameter received from the quantization parameter estimation portion 125 in a memory.

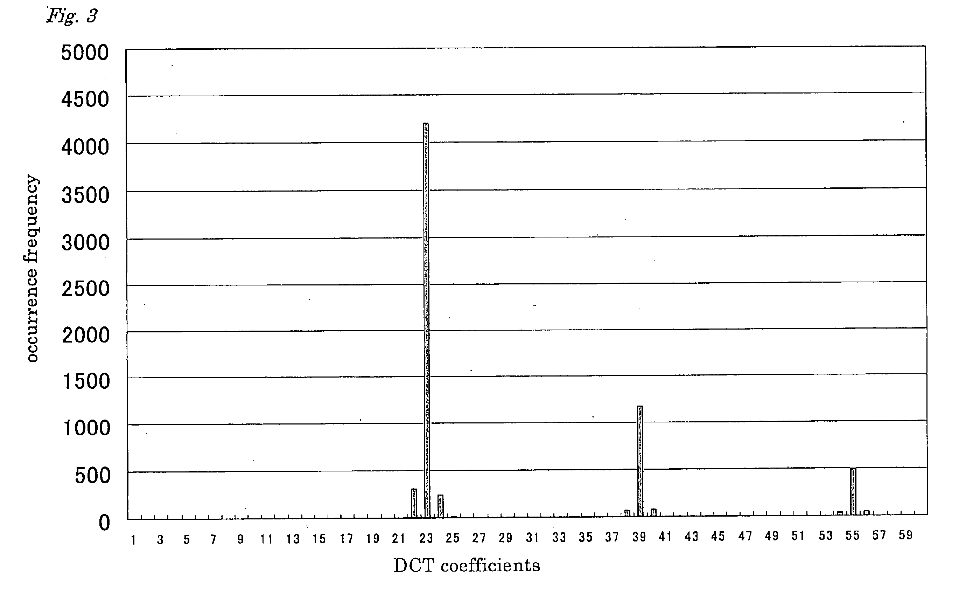

Next, the first predetermined method for estimating the picture type will be described. The intra-frame coded image is obtained by performing the DCT and the quantization as a variable length coding for pixel values within a frame. Therefore, the decoded image is obtained by decoding the code sequence in variable length and performing inverse quantization and inverse DCT. Accordingly, if the decoded image of the intra-frame coding is processed by DCT in the orthogonal transformation portion 120, peaks appear in the occurrence frequency of levels of the DCT coefficients at a period corresponding to the quantization parameter when it was coded as shown in Fig. 3. On the contrary, a tendency for most levels to have zero occurrence frequency occurs. Note that the level of the DCT coefficients means a value of the DCT coefficients.

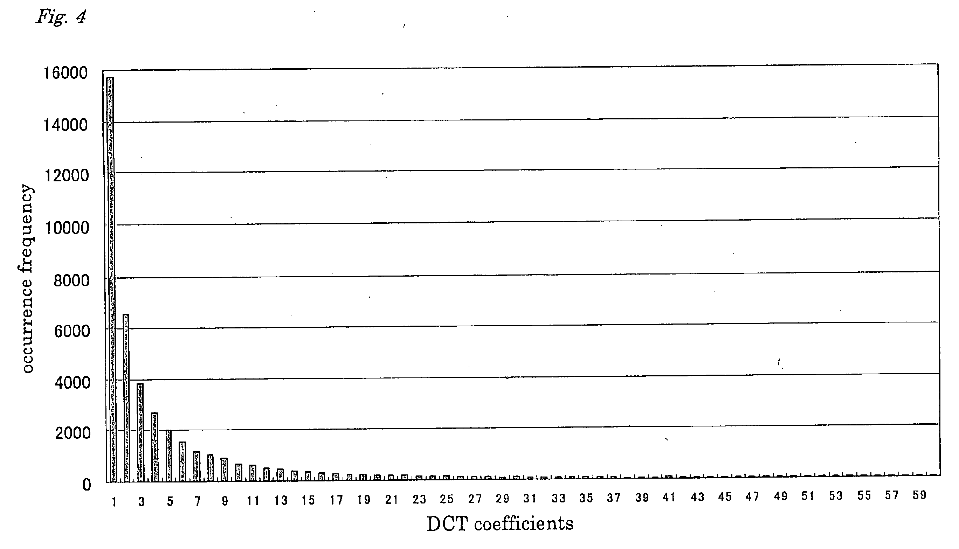

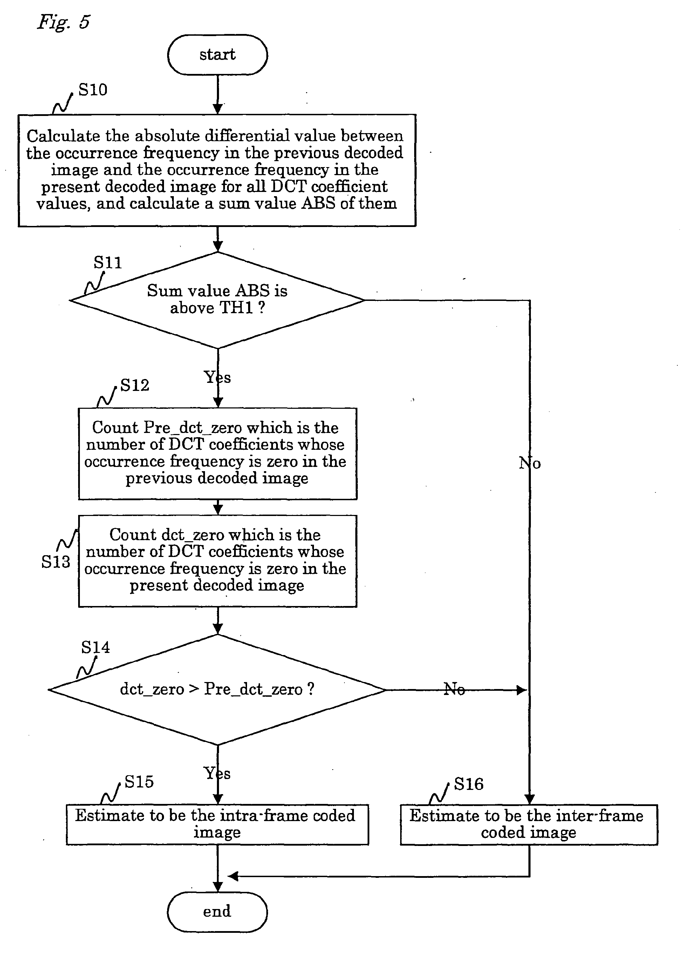

On the other hand, the inter-frame coded image is obtained by performing the DCT and the quantization as a variable length coding for differential values between the image to be coded and a reference image. Therefore, the decoding portion 112 obtains the decoded image by decoding the code sequence in a variable length, performing inverse quantization and inverse DCT, and adding it to the reference image. Accordingly, if the decoded image of the inter-frame coding is processed by DCT in the orthogonal transformation portion 120, no periodical peaks appear in the occurrence frequency of levels as shown in Fig. 4 due to the influence of adding the reference image. Namely, most DCT coefficients have a certain occurrence frequency. The picture type estimation portion 121 utilizes the above-mentioned property for estimating the picture type of the decoded image. Fig. 5 shows a flowchart of a process for estimating the picture type.

Hereinafter, a procedure for estimating a picture type will be described with reference to Fig. 5. First, an absolute differential value between the occurrence frequency in the previous decoded image and the occurrence frequency in the present decoded image is calculated for all DCT coefficient values, and a sum value ABS of them is calculated in step S10. If the sum value ABS is large, it means that the occurrence frequency of the DCT coefficients has changed substantially. Next in step S11, it is decided whether the sum value ABS is above a threshold level TH1 or not so as to decide whether or not the occurrence frequency of the DCT coefficients has changed substantially. If the decision result in step S11 is true, the process goes to step S12, in which Pre_dct_zero, which is the number of DCT coefficients whose occurrence frequency is zero in the previous decoded image, is counted. Then in the next step S13, dct_zero, which is the number of DCT coefficients whose occurrence frequency is zero in the present decoded image, is counted, and the process goes to step S14. In step S14, dct_zero is compared with Pre_dct_zero. If dct_zero is larger than the other, the process goes to step S15, in which the picture type is estimated to be the intra-frame coded image. If the decision result is false in step S11 and in step S14, the process goes to step S16, in which the picture type is estimated to be the inter-frame coded image.

The picture type estimation portion 121 estimates the picture type of the decoded image in accordance with the procedure described above.

Note that the decision in step S11 may be any decision method as long as it can be used for deciding whether or not a substantial change has occurred in the tendency of the occurrence frequency of the DCT coefficients. It is possible to use a variance value or to compare with the sum value ABS that was obtained when estimating the picture type of the previous decoded image.

Next, the second predetermined method for estimating the motion vector will be described. The motion vector estimation portion 123 estimates the motion vector in accordance with block matching between the present decoded image and the previous decoded image. However, if the picture type of the image received from the picture type estimation portion 121 is the intra-frame coded image, the motion vector is not estimated. The motion vector of the value 0 is sent to the post-processing portion 111.

Note that though the motion vector of the value 0 is sent here, any technique can be used as long as it can indicate that the motion vector does not exist.

In addition, though the previous decoded image is stored in the frame memory 124, it is possible to store a plurality of decoded images without limiting to the previous decoded image.

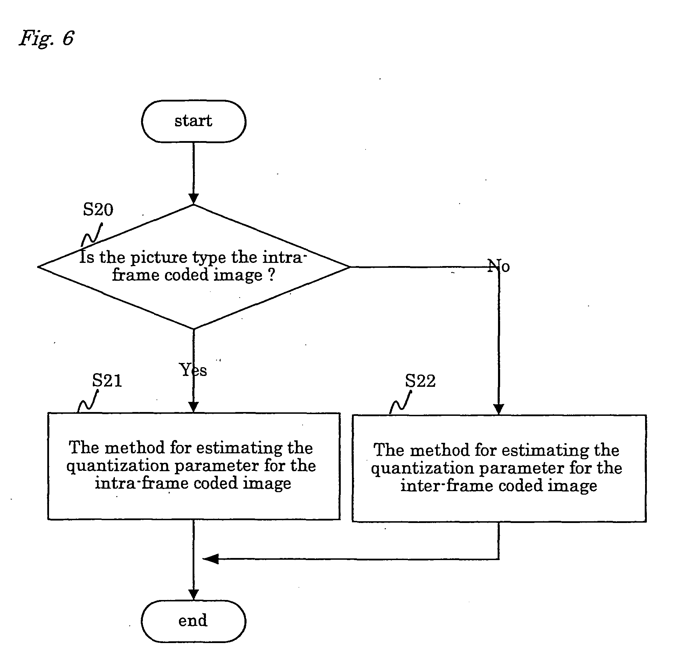

Next, the third predetermined method for estimating the quantization parameter will be described. A flowchart of the method for estimating the quantization parameter in the first embodiment is shown in Fig. 6. Hereinafter, a method for estimating the quantization parameter will be described with reference to Fig. 6. First, the picture type of the decoded image that is entered is decided in step S20. The process goes to step S21 if it is the intra-frame coded image, while the process goes to step S22 if it is the inter-frame coded image. In the next step S21, a fourth predetermined method (that will be described later) for the intra-frame coded image is used for estimating the quantization parameter. In addition, a fifth predetermined method (that will be described later) for the inter-frame coded image is used for estimating the quantization parameter in step S22.

Next, the fourth predetermined method which is a method for estimating the quantization parameter of the intra-frame coded image will be described. The intra-frame coded image has the tendency that peaks of occurrence frequency appear in levels of DCT coefficients at a period corresponding to the quantization parameter, and on the contrary most levels have zero occurrence frequency as shown in Fig. 3 when performing the DCT for the decoded image. In general, when an image signal is processed by the DCT, power is concentrated in a few specific frequency components while other most frequent components have values close to zero. Therefore, when performing quantization of the DCT coefficients, most DCT coefficients become the levels of 0 or 1. Thus, except for the DCT coefficient value 0, there is a high probability that the DCT coefficient values having a high occurrence frequency after the inverse quantization had a level 1 before the inverse quantization. Namely, there is a high probability that the DCT coefficient DCTcoeff having a high occurrence frequency in Fig. 3 was obtained from the DCT coefficient that had the level 1 before the inverse quantization. Therefore, the DCT coefficient DCTcoeff and the following equations obtained from the equation of the inverse quantization in MPEG4 video decoding are used for estimating the quantization parameter QP that was used for coding.

$$3 \times QP = DCTcoeff \ (QP = odd)$$

$$3 \times QP = DCTcoeff + 1 \ (QP = even)$$

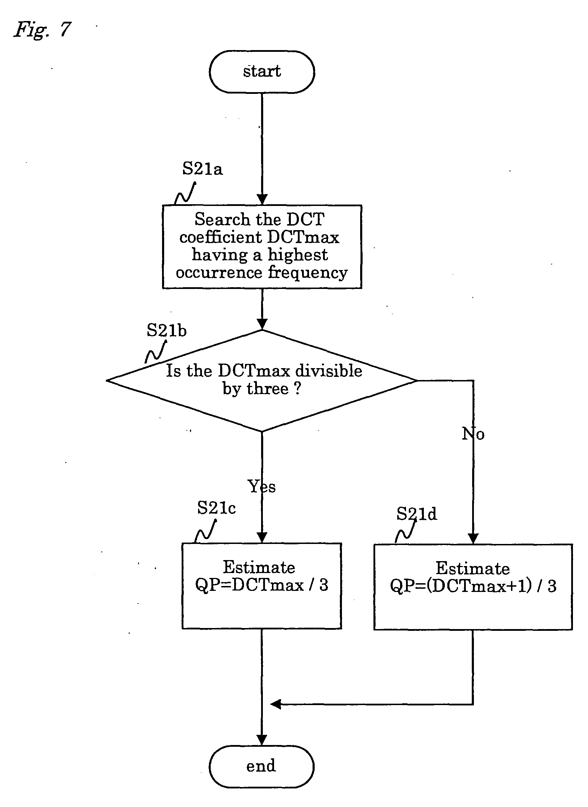

A flowchart of the method for estimating the quantization parameter of the intra-frame coded image using the above equations is shown in Fig. 7.

Hereinafter, a procedure for estimating the quantization parameter of the intra-frame coded image will be described with reference to Fig. 7. First, a DCT coefficient having the highest occurrence frequency (hereinafter referred to as DCTmax) is searched for in step S21a and then the process goes to step S21b. In step S21b, it is decided whether the DCTmax is divisible by three or not. If it is, an operation in step S21c is performed, and the result thereof is delivered as the estimated quantization parameter. If the DCTmax is not divisible by three in step S21b, an operation in step S21d is performed, and the result thereof is delivered as the estimated quantization parameter.

Next, the fifth predetermined method which is a method for estimating the quantization parameter of the inter-frame coded image will be described. The inter-frame coding has a tendency that when the decoded image is processed by DCT, no periodical peaks appear in the occurrence frequency as shown in Fig. 4, and most DCT coefficients have a certain occurrence frequency. Therefore, it is difficult to estimate the quantization parameter from the occurrence tendency like the intra-frame coded image.

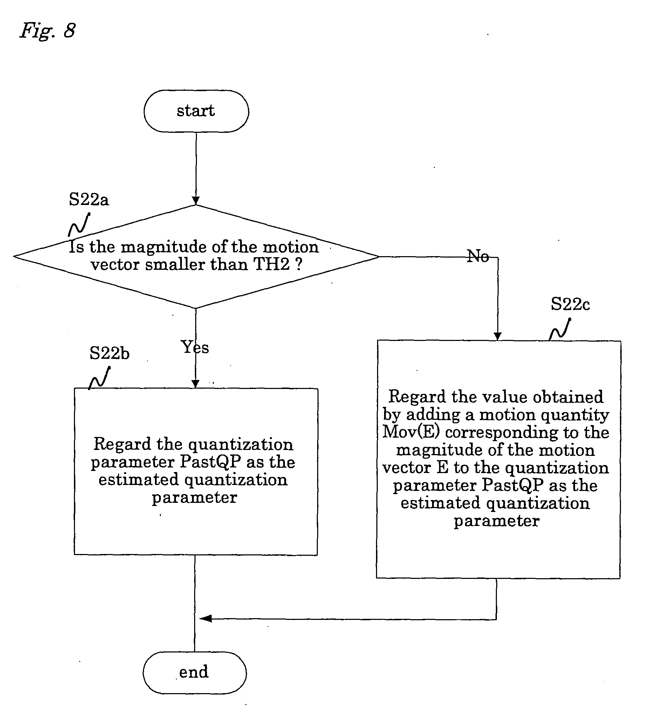

On the other hand, because the inter-frame coded image is decoded by adding to the previous image when decoding, there is a high probability of having a characteristic of the previous decoded image as the motion is smaller. In addition, on the contrary if the motion is large, the quantization parameter has a high tendency to increase. Therefore, in the case of the inter-frame coded image, the estimated value is determined by adding an alteration value of the motion quantity corresponding to the magnitude of the motion vector to the quantization parameter estimated from the previous decoded image. Fig. 8 shows a flowchart of the method for estimating the quantization parameter of the inter-frame coded image.

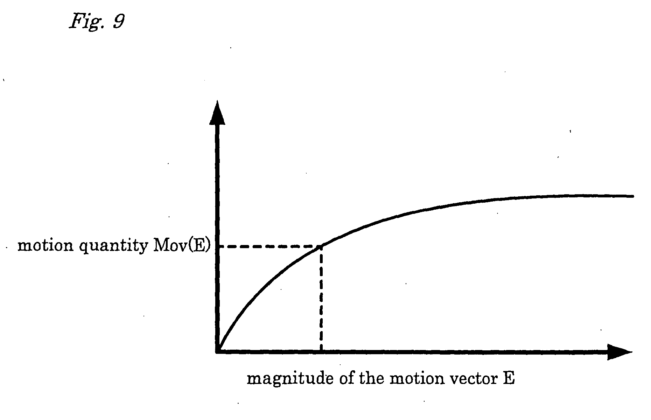

Hereinafter, a procedure for estimating the quantization parameter of the inter-frame coded image will be described with reference to Fig. 8. First, the magnitude of the motion vector is decided in step S22a. The process goes to step 22b if the motion vector is smaller than a threshold level TH2, and otherwise goes to step S22c. In step S22b, it is decided that the decoded image substantially inherits a character of the previous decoded image as it is an image with a small motion, and the quantization parameter PastQP of the previous decoded image is regarded as the estimated value. In step S22c, it is decided that the decoded image has an increasing quantization parameter as the decoded image is an image with a large motion, and the estimated value is determined by adding a motion quantity Mov(E) corresponding to the magnitude of the motion vector E as shown in Fig. 9 to the quantization parameter PastQP. In,Fig. 9, the motion quantity Mov(E) to be added is given as a monotone increasing value to the magnitude of the motion vector E.

In accordance with the procedure described above, the quantization parameter estimation portion 125 estimates the quantization parameter.

Note that although the motion quantity Mov(E) corresponding to the magnitude of the motion vector E is added here, it is possible to add a value corresponding to the motion vector and the quantization parameter of the intra-frame coded image or a fixed value.

In addition, although only the value of the DCT coefficient having the highest occurrence frequency is used for estimating the quantization parameter of the intra-frame coded image here, it is possible to use a plurality of values of DCT coefficients having peak occurrence frequencies at a period corresponding to the quantization parameter for determining the quantization parameter from the equation of the inverse quantization.

(Effects)

By the procedure as described above, a coding parameter estimation portion 110 switches the method for estimating the quantization parameter in accordance with the picture type of the decoded image or the motion vector. Thus, the quantization parameter is estimated by using the quantization parameter that was used for coding if the decoded image is the intra-frame coded image while using the motion quantity if the decoded image is the inter-frame coded image. In this way, a post-processing portion 111 can perform the post-processing by using the quantization parameter, the picture type and the motion vector so as to eliminate noise of the decoded image.

The post-processing portion 111 has the effect that the coding parameters estimated by the coding parameter estimation portion 110a can be used for performing the post-processing independently of the decoder portion 112. Namely, noise of the decoded image can be reduced independently of the specification of the decoder portion 112 even if the post-processing portion 111 cannot obtain the coding parameters directly from the decoder portion 112.

The post-processing portion 111 has the effect that noise generated in the decoded image can be reduced by performing the method of using the quantization parameter like Japanese unexamined patent publications No. 2003-18600, the method of using the picture type like Japanese unexamined publication (PCT) No. 2001-510952 or the post-processing method of using the motion vector like Japanese unexamined patent publications No. 2002-330436 independently of the decoder portion 112.

The quantization parameter estimation portion 125 (the coding parameter estimation portion 110a) can estimate the quantization parameter in accordance with the level of a DCT coefficient having the highest occurrence frequency in the distribution of the orthogonal transformation coefficients of the decoded image. Therefore, the post-processing portion 111 has the effect that noise of the decoded image can be eliminated by the method for eliminating noise using the quantization parameter.

The picture type estimation portion 121 (the coding parameter estimation portion 110a) has the effect that the inter-frame coded image that inherits a characteristic of the intra-frame coded image because of a small motion can be decided correctly by comparing the orthogonal transformation coefficients of the present decoded image with the orthogonal transformation coefficients of the previous decoded image so that the picture type can be estimated with high accuracy.

The quantization parameter estimation portion 125 (the coding parameter estimation portion 110a) can switch the method for estimating the quantization parameter in accordance with the picture type of the decoded image so as to estimate the quantization parameter of the intra-frame coded image or the inter-frame coded image in accordance with each characteristic.

The motion vector estimation portion 123 (the coding parameter estimation portion 110a) can decide whether a motion vector existed or not in accordance with the picture type of the decoded image so that the amount of processing necessary for block matching can be reduced.

The quantization parameter estimation portion 125 (the coding parameter estimation portion 110a) can switch the method for estimating the quantization parameter in accordance with the picture type of the decoded image or the magnitude of the motion vector, so that the effect of estimating a more appropriate quantization parameter can be obtained.

The post-processing portion 111 can eliminate block noise independently of the decoder by using the estimated coding parameters so that the effect of reducing deterioration of the image quality of the decoded image can be obtained.

The coding parameter estimation portion 110a can estimate the coding parameters by using the orthogonal transformation coefficients of the decoded image stored in the memory so that the effect of using more appropriate coding parameters for the post-processing can be obtained.

(Others)

Note that as an example of the method for estimating the picture type, the motion vector and the quantization parameter in MPEG4 format is described above in this embodiment, but a similar method can be used for estimating coding parameters not only in H.261 or H.263 but also in MPEG1 or MPEG2 that uses a quantization table if equations of the quantization table and the inverse quantization are known.

In addition, as long as coding methods using the orthogonal transformation and the quantization, a similar method can be used for estimating the picture type, the motion vector and the quantization parameter.

In addition, though elimination of block noise is mentioned as typical post-processing here, it can be other post-processing using the coding parameters such as elimination of mosquito noise or the like.

Note that the post-processing portion 111, the decoding portion 112 and the coding parameter estimation portion 110a described in the above embodiment can be realized as individual LSIs or as a single LSI. In addition, portions of the coding parameter estimation portion 110a can also be realized as individual LSIs or as a single LSI. In addition, the decoding portion 112, the coding parameter estimation portion 110a and the post-processing portion 111 can be realized as individual devices. It is the same for the other embodiments described below.

In addition, as the method for estimating the motion vector, the method for estimating the quantization parameter and the method for estimating the picture type described above can be realized as programs of a computer or the like having a CPU. It is the same for the other embodiments described below.

(Second embodiment)

A block diagram of a second embodiment of the present invention is the same as the first embodiment shown in Fig. 1 except for the coding parameter estimation portion 110a. Hereinafter, the coding parameter estimation portion 110a will be described.

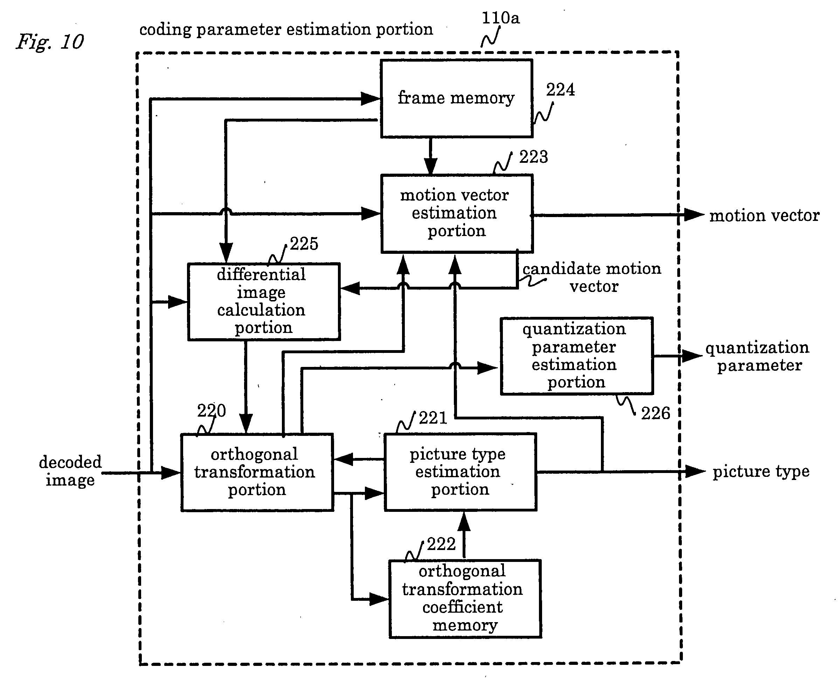

Fig. 10 is a block diagram showing the internal structure' of the coding parameter estimation portion 110a of the second embodiment. As shown in Fig. 10, the coding parameter estimation portion 110a includes an orthogonal transformation portion 220 for performing the DCT, a picture type estimation portion 221 for estimating the picture type of the decoded image, an orthogonal transformation coefficient memory 222 for storing DCT coefficients of the previous decoded image, a motion vector estimation portion 223 for estimating the motion vector, a frame memory 224 for storing the previous decoded image, a differential image calculation portion 225 for determining a differential'image between the decoded image and the reference image, and a quantization parameter estimation portion 226 for estimating the quantization parameter.

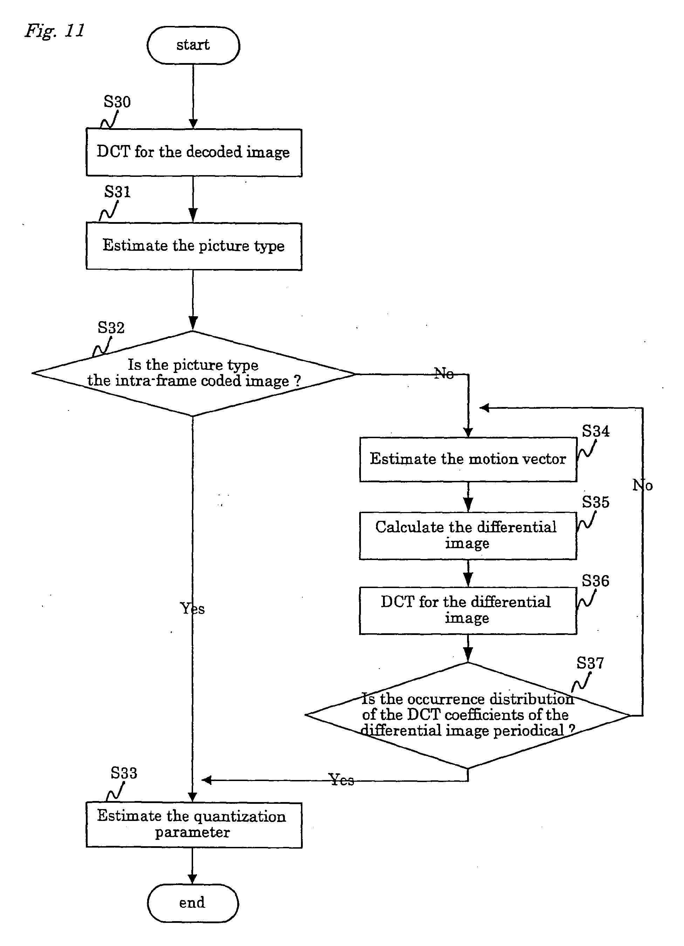

Hereinafter, an operation of the coding parameter estimation portion 110a will be described with reference to the flowchart shown in Fig. 11. First, the orthogonal transformation portion 220 performs the DCT for the decoded image that is received from the decoding portion 112 (step S30), and the converted DCT coefficient is sent to the picture type estimation portion 221. Next, the picture type estimation portion 221 estimates the picture type of the decoded image by the first predetermined method as described in the first embodiment (step S31) and sends the estimated picture type to the motion vector estimation portion 223, the orthogonal transformation portion 220 and the post-processing portion 111. If the picture type received from the picture type estimation portion 221 is the intra-frame coded image, the orthogonal transformation portion 220 sends the DCT coefficients of the decoded image to the quantization parameter estimation portion 226. The quantization parameter estimation portion 226 uses the DCT coefficients of the decoded image received from the orthogonal transformation portion 220 for estimating the quantization parameter by the fourth predetermined method as described in the first embodiment and delivers the estimated quantization parameter to the post-processing portion 111 (steps S32 and S33).

If the picture type of the decoded image is the inter-frame coded image, the motion vector estimation portion 223 uses the entered decoded image and the previous decoded image obtained from the frame memory 224 for estimating the motion vector by the second predetermined method as describeb in the first embodiment (step S34) and sends the estimated motion vector as a candidate motion vector to the differential image calculation portion 225. The differential image calculation portion 225 uses the entered decoded image, the candidate motion vector and the previous decoded image from the frame memory 224 for calculating the differential image (step S35) and sends the calculated differential image to the orthogonal transformation portion 220. The orthogonal transformation portion 220 performs the DCT for the differential image received from the differential image calculation portion 225 and decides whether or not occurrence distribution of the DCT coefficients of the differential image is periodical, unlike the intra-frame coded image shown in Fig. 3 (step S37). If the occurrence distribution of the DCT coefficients is periodical, it is decided that an appropriate motion vector has been estimated, and the DCT coefficients of the differential image are sent to the quantization parameter estimation portion 226. The motion vector estimation portion 223 is informed that the candidate motion vector is appropriate. Then the motion vector estimation portion 223 sends the candidate motion vector as the estimated motion vector to the post-processing portion 111 responding to the information from the orthogonal transformation portion 220. If the occurrence distribution of the DCT coefficient does not show a periodical feature as shown in Fig. 4, it is decided that estimation of an appropriate motion vector has failed. In this case, the process goes back to step S34 for detecting another candidate motion vector. The quantization parameter estimation portion 226 applies the fourth predetermined method as described in the first embodiment to the DCT coefficients of the differential image received from the orthogonal transformation portion 220 for estimating the quantization parameter and delivers the estimated quantization parameter to the post-processing portion 111 (step S33).

(Effects).

As described above, the distribution of the DCT coefficients of the differential image becomes periodical by determining an appropriate motion vector also for the inter-frame coded image, and the quantization parameter can be estimated in the same manner as for the intra-frame coded image. As a result, the accuracy of estimating the motion vector and the quantization parameter is further improved compared with the first embodiment. Other than that, the same effects can be obtained in each portion corresponding to the first embodiment.

(Others)

Note that an example of the method for estimating the picture type, the motion vector and the quantization parameter in MPEG4 format is described above in this embodiment, but a similar method can be used for estimating coding parameters not only in H.261 or H.263 but also in MPEG1 or MPEG2 that uses a quantization table if equations of the quantization table and the inverse quantization are known.

In addition, as long as coding methods using the orthogonal transformation and the quantization are used, a similar method can be used for estimating the picture type, the motion vector and the quantization parameter.

In addition, though elimination of block noise is mentioned as typical post-processing here, it can be other post-processing using the coding parameters such as elimination of mosquito noise or the like.

(Third Embodiment)

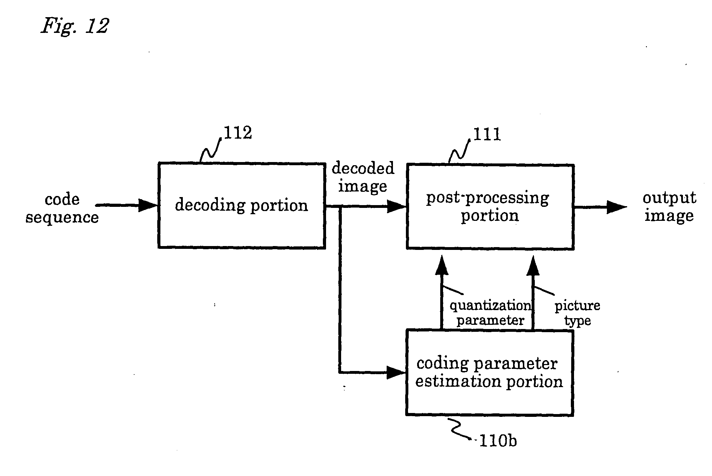

Fig. 12 is a block diagram showing the third embodiment of the present invention, which includes a coding parameter estimation portion 110b, the post-processing portion 111 and the decoding portion 112.

The coding parameter estimation portion 110b receives the decoded image as an input from the decoding portion 112 and estimates the quantization parameter and the picture type of the decoded image from the entered decoded image in accordance with a predetermined method. Then, the estimated quantization parameter and the picture type are delivered to the post-processing portion 111.

The post-processing portion 111 receives the decoded image from the decoding portion 112, and the quantization parameter and the picture type from the coding parameter estimation portion 110b as each input, so as to eliminate block noise by the conventional method using the quantization parameter and the picture type.

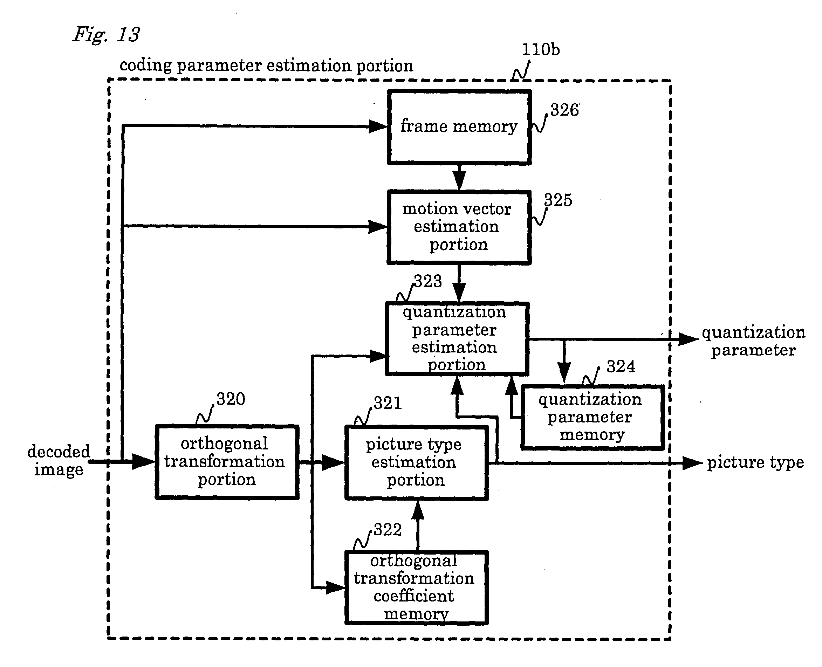

Next, a structure of the coding parameter estimation portion 110b in this third embodiment will be described. Fig. 13 is a block diagram showing the internal structure of the coding parameter estimation portion 110b. As shown in Fig. 13, the coding parameter estimation portion 110b includes an orthogonal transformation portion 320 for performing the DCT, a picture type estimation portion 321 for estimating the picture type of the decoded image, an orthogonal transformation coefficient memory 322 for storing the DCT coefficients of the previous decoded image, a quantization parameter estimation portion 323 for estimating the quantization parameter, a quantization parameter memory 324 for storing the previous quantization parameter, a motion quantity calculation portion 325 for calculating the motion quantity from the previous decoded image and the decoded image, and a frame memory 326 for storing the previous decoded image.

Next, an operation of the coding parameter estimation portion 110b will be described. First, the orthogonal transformation portion 320 performs the DCT for the decoded image that has been received from the decoding portion 112 and sends the orthogonal transformation coefficients to the picture type estimation portion 321, the orthogonal transformation coefficient memory 322 and the quantization parameter estimation portion 323.

Next, the picture type estimation portion 321 receives the DCT coefficients of the previous decoded image from the orthogonal transformation coefficient memory 322 and estimates the picture type of the decoded image by the first predetermined method that was described in the first embodiment. Then, the picture type estimation portion 321 sends the estimated picture type to the quantization parameter estimation portion 323 and the post-processing portion 111. The orthogonal transformation coefficient memory 322 receives the present DCT coefficients of the decoded image from the orthogonal transformation portion 320 and stores them in the memory.

Next, the motion quantity calculation portion 325 calculates a SAD (Sum of Absolute Differences) between the decoded image received from the decoding portion 112 and the previous decoded image obtained from the frame memory 326, and sends it to the quantization parameter estimation portion 323. The frame memory 326 stores the present decoded image received from the decoding portion 112 in the memory.

Next, the quantization parameter estimation portion 323 estimates the quantization parameter by a sixth predetermined method (that will be described later) and derives the quantization parameter to the quantization parameter memory 324 and the post-processing portion 111. Then the quantization parameter memory 324 stores the value of the quantization parameter entered from the quantization parameter estimation portion 323 in the memory.

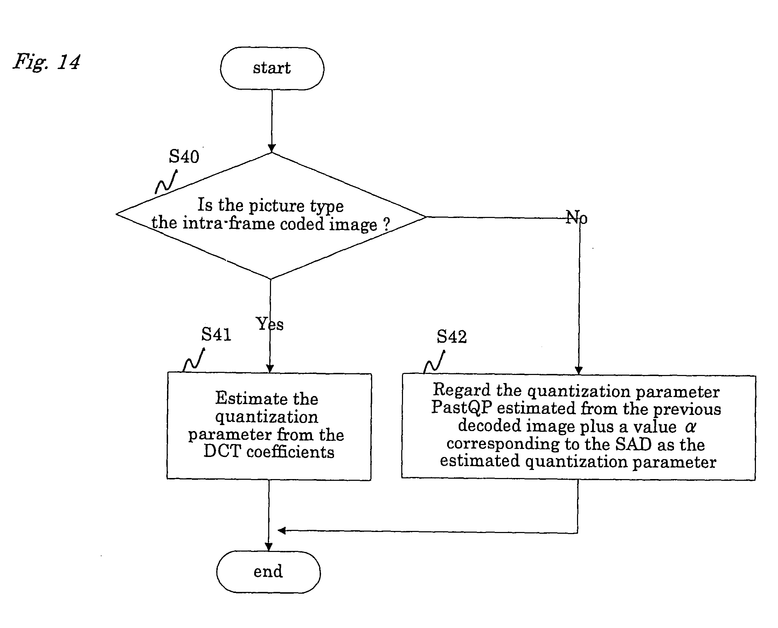

Hereinafter, the sixth predetermined method for estimating the quantization parameter in the third embodiment will be described with reference to the flowchart shown in Fig. 14. First, it is decided whether the picture type is the intra-frame coded image or not in step S40. If the picture type is the intra-frame coded image, the process goes to step S41 where the quantization parameter is estimated by using the fourth predetermined method which is the method for estimating the quantization parameter of the intra-frame coded image described in the first embodiment. If the picture type is the inter-frame coded image, the process goes to step S42 where a sum of the quantization parameter PastQP which is estimated from the previous decoded image and a value $\alpha$ corresponding to the SAD is determined as the quantization parameter of the decoded image. The value $\alpha$ varies corresponding to the SAD. If the SAD is small, it is decided that the motion is small, so the value $\alpha$ is set to a small value. On the contrary, if the SAD is large, it is decided that the motion is large, so the value $\alpha$ is set to a large value. Namely, the value $\alpha$ is set so as to increase monotonously corresponding to the SAD. For example, the value $\alpha$ is set so as to be proportional to the SAD. The reason why the value of the quantization parameter is to be estimated in accordance with the motion quantity is already described in the first embodiment.

By the procedure described above, the quantization parameter estimation portion 323 estimated the quantization parameter, which is delivered to the post-processing portion 111.

(Effects)

By the method described above, the coding parameter estimation portion 110b switches the method for estimating the quantization parameter in accordance with the picture type of the decoded image. If the decoded image is the intra-frame coded image, the quantization parameter that was used for coding can be estimated. If the decoded image is the inter-frame coded image, the quantization parameter can be estimated in accordance with the motion quantity by the SAD.

In the third embodiment, the detection of the motion vector is not performed; therefore, when performing the post-processing such that the motion vector is not required or the motion vector can be obtained by another method, the post-processing can be performed by using the quantization parameter and the picture type while suppressing the amount of processing compared with the first embodiment.

Other than that, the same effects can be obtained in each portion corresponding to the first embodiment.

(Others)

Note that though the SAD is used as a scale of the motion quantity in this embodiment, the invention is not limited to the SAD but can be SSD (Sum of Square Differences) or the like.

In addition, though an example of the method for estimating the picture type and the quantization parameter in MPEG4 format is described in this embodiment, a similar method can be used for estimating coding parameters not only in H.261 or H.263 but also in MPEG1 or MPEG2 that uses a quantization table if equations of the quantization table and the inverse quantization are known.

In addition, as long as coding methods using the orthogonal transformation and the quantization are used, a similar method can be used for estimating the picture type and the quantization parameter.

In addition, though elimination of block noise is mentioned as typical post-processing here, it can be other post-processing using the coding parameters such as elimination of mosquito noise or the like.

In addition, this method of the third embodiment can be realized in the first or the second embodiment, too, by extracting the quantization parameter and the picture type from the output of the coding parameter estimation portion 110a in the first or the second embodiment.

(Fourth Embodiment)

The block diagram of the fourth embodiment of the present invention is similar to that of the third embodiment, so only the coding parameter estimation portion 110b will be described here.

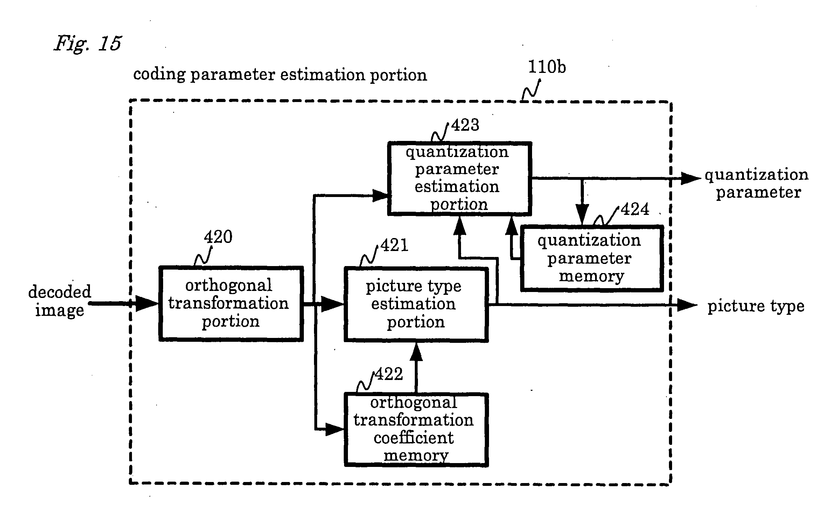

Fig. 15 is a block diagram showing the internal structure of the coding parameter estimation portion 110b in this fourth embodiment. As shown in Fig. 15, the coding parameter estimation portion 110b has a structure in which the motion quantity calculation portion 325 and the frame memory 326 are absent from the structure of the third embodiment. The operation of the coding parameter estimation portion 110b is the same as the third embodiment except for the quantization parameter estimation portion 423, so only the operation of the quantization parameter estimation portion 423 will be described here.

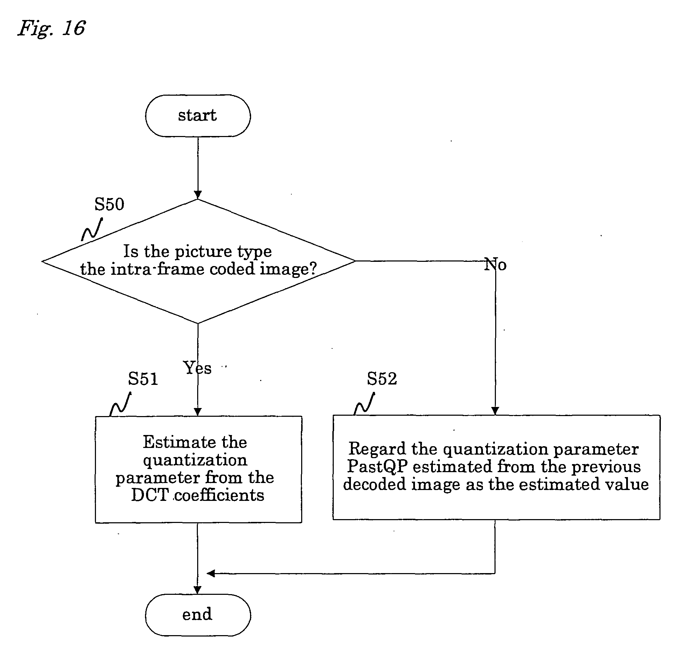

A flowchart of the method for estimating the quantization parameter in the fourth embodiment is shown in Fig. 16. Hereinafter, the method for estimating the quantization parameter will be described with reference to Fig. 16. First, the quantization parameter estimation portion 423 decides whether or not the picture type obtained from the picture type estimation portion 421 is the intra-frame coded image (step S50). If it is the intra-frame coded image, the quantization parameter is estimated by the fourth predetermined method which is the estimation method for the intra-frame coded image described in the first embodiment (step S51). Then, the estimated quantization parameter is sent to the quantization parameter memory 424 and the post-processing portion 111. If the received picture type is the inter-frame coding, the quantization parameter of the previous decoded image is obtained from the quantization parameter memory 424, and the value thereof is sent as the quantization parameter of the present decoded image to the post-processing portion 111 (step S52).

According to the procedure described above, the quantization parameter estimation portion 423 estimates the quantization parameter, which is delivered to the post-processing portion 111.

(Effects)

By the method described above, the fourth embodiment can realize the post-processing using the quantization parameter and the picture type while suppressing the SAD calculation process or the capacity of frame memory compared with the third embodiment.

Other than that, the same effects can be obtained in each portion corresponding to the first embodiment.

(Others)

Note that, though an example of the method for estimating the picture type and the quantization parameter in MPEG4 format is described in this embodiment, a similar method can be used for estimating coding parameters not only in H.261 or H.263 but also in MPEG1 or MPEG2 that uses a quantization table if equations of the quantization table and the inverse quantization are known.

In addition, as long as coding methods using the orthogonal transformation and the quantization are used, a similar method can be used for estimating the picture type and the quantization parameter.

In addition, though elimination of block noise is mentioned as typical post-processing here, it can be other post-processing using the coding parameters such as elimination of mosquito noise or the like.

In addition, this method of the fourth embodiment can be realized in the first or the second embodiment too, by extracting the quantization parameter and the picture type from the output of the coding parameter estimation portion 110a in the first or the second embodiment.

(Fifth Embodiment)

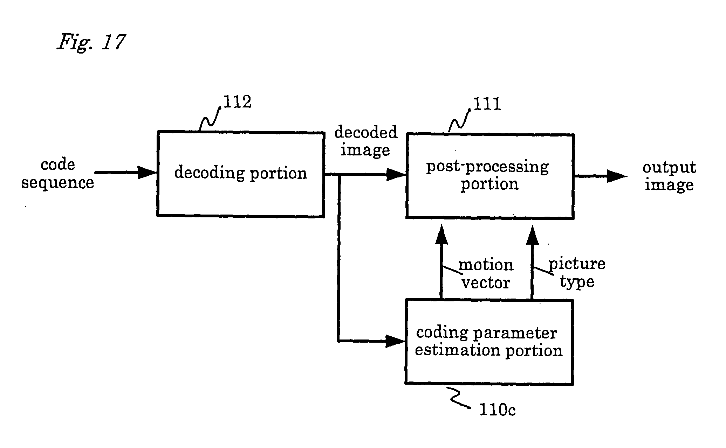

Fig. 17 is a block diagram of the fifth embodiment of the present invention, which includes a coding parameter estimation portion 110c, the post-processing portion 111 and the decoding portion 112.

The coding parameter estimation portion 110c receives the decoded image as an input from the decoding portion 112 and estimates the motion vector and the picture type of the decoded image from the entered decoded image in accordance with a predetermined method (for example, the second predetermined method and the first predetermined method). Then, the estimated motion vector and the picture type are delivered to the post-processing portion 111.

The post-processing portion 111 receives the decoded image from the decoding portion 112, and the motion vector and the picture type as inputs from the coding parameter estimation portion 110c so as to eliminate block noise by the conventional method using the motion vector and the picture type.

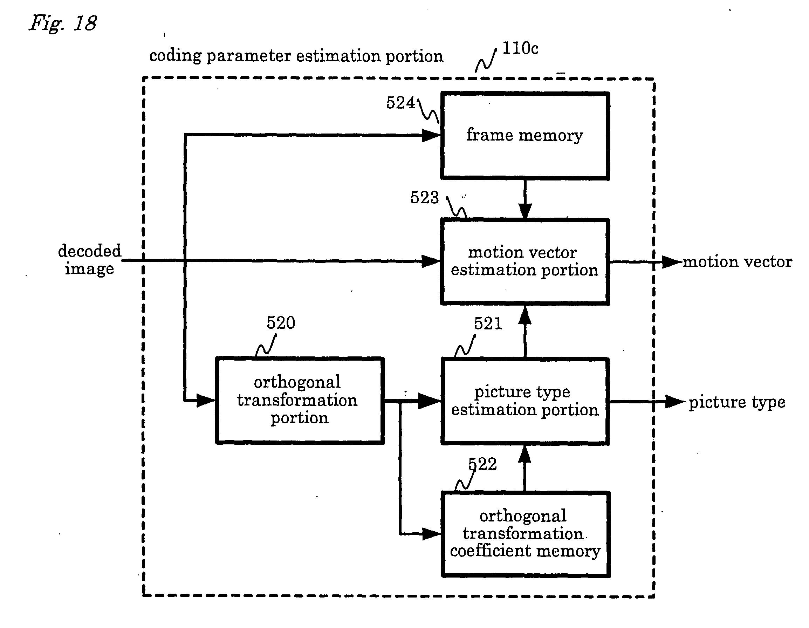

Next, a block diagram showing the internal structure of the coding parameter estimation portion 110c in this fifth embodiment is shown in Fig. 18. As shown in Fig. 18, the coding parameter estimation portion 110c has a structure in which the quantization parameter estimation portion 125 and the quantization parameter memory 126 are absent from the structure of the first embodiment. The motion vector estimation portion 123 and the picture type estimation portion 121 estimates the motion vector and the picture type by using the second predetermined method and the first predetermined method similarly to the first embodiment.

(Effects)

By the method described above, the fifth embodiment can realize the post-processing using the motion vector and the picture type while suppressing the amount of processing compared with the first embodiment when performing post-processing that does not need the quantization parameter, or can obtain the quantization parameter by another method, because the process for estimating the quantization parameter can be eliminated.

Other than that, the same effects can be obtained in each portion corresponding to the first embodiment.

(Others)

Note that though an example of the method for estimating the motion vector and the picture type in MPEG4 format is described in this embodiment, a similar method can be used for estimating coding parameters not only in H.261 or H.263 but also in MPEG1 or MPEG2 that uses a quantization table if equations of the quantization table and the inverse quantization are known.

In addition, as long as coding methods using the orthogonal transformation and the quantization are used, a similar method can be used for estimating the motion vector and the picture type.

In addition, though elimination of block noise is mentioned as typical post-processing here, it can be other post-processing using the coding parameters such as elimination of mosquito noise or the like.

In addition, this method of the fifth embodiment can be realized in the first or the second embodiment too, by extracting the motion vector and the picture type from the output of the coding parameter estimation portion 110a in the first or the second embodiment.

(Sixth Embodiment)

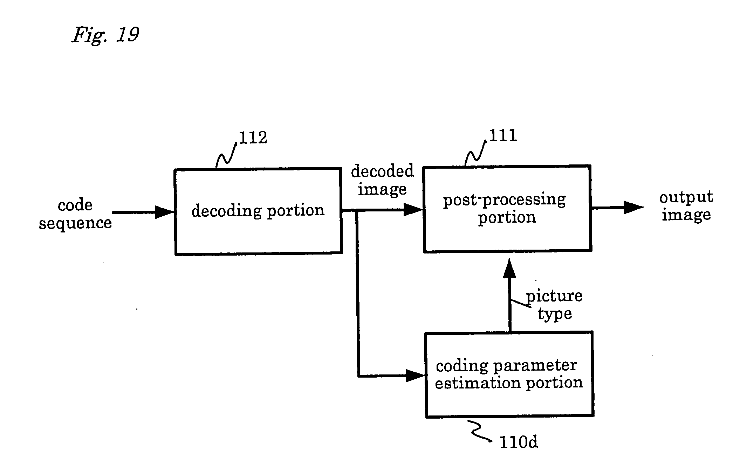

Fig. 19 is a block diagram of the sixth embodiment of the present invention, which includes a coding parameter estimation portion 110d, the post-processing portion 111 and the decoding portion 112.

The coding parameter estimation portion 110d receives the decoded image as an input from the decoding portion 112 and estimates the picture type of the decoded image from the entered decoded image in accordance with a predetermined method. Then, the estimated picture type is delivered to the post-processing portion 111.

The post-processing portion 111 receives the decoded image from the decoding portion 112 and the picture type from the coding parameter estimation portion 110d as inputs so as to eliminate block noise by the conventional method using the picture type.

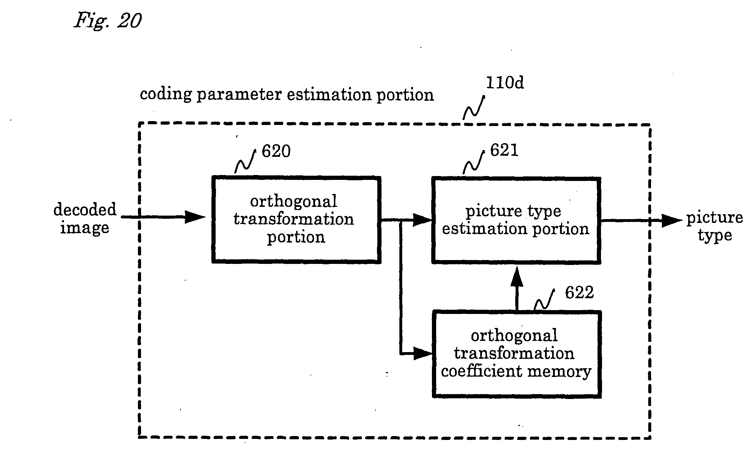

Next, a block diagram showing the internal structure of the coding parameter estimation portion 110d in this sixth embodiment is shown in Fig. 20. As shown in Fig. 20, the coding parameter estimation portion 110d has a structure in which the motion vector estimation portion 523 and the frame memory 524 are absent from the structure of the fifth embodiment. The picture type estimation portion 621 estimates the picture type by using the first predetermined method described in the first embodiment, and the estimated picture type is sent to the post-processing portion 111.

(Effects)

By the method described above, the sixth embodiment can realize the post-processing using the picture type while reducing the amount of processing and memory capacity compared with the fifth embodiment when performing the post-processing that requires the picture type, because the process for detecting the motion vector and the frame memory capacity are reduced.

Other than that, the same effects can be obtained in each portion corresponding to the first embodiment.

(Others)

Note that though an example of the method for estimating the picture type in MPEG4 format is described in this embodiment, a similar method can be used for estimating coding parameters in H.261 or H.263 as well as in MPEG1 or MPEG2.

In addition, as long as coding methods using the orthogonal transformation and the quantization are used, a similar method can be used for estimating the picture type.

In addition, though elimination of block noise is mentioned as typical post-processing here, it can be other post-processing using the coding parameters such as elimination of mosquito noise or the like.

In addition, this method of the fifth embodiment can be realized in any one of the first through the fifth embodiments too, by extracting only the picture type from the output of the coding parameter estimation portion in the first through the fifth embodiments.

(Seventh Embodiment)

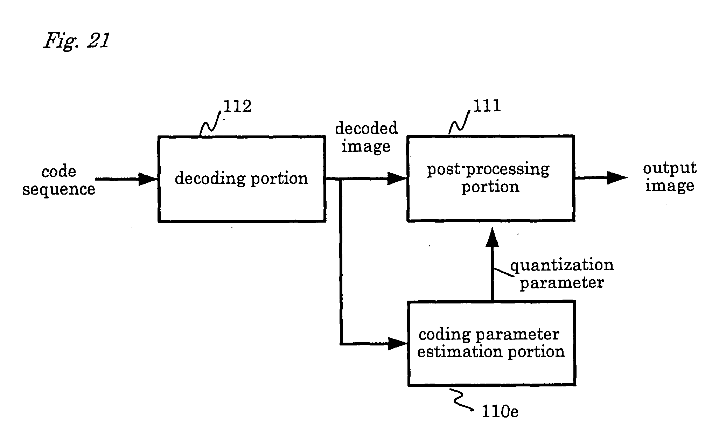

Fig. 21 is a block diagram of the seventh embodiment of the present invention, which includes a coding parameter estimation portion 110e, the post-processing portion 111 and the decoding portion 112.

The coding parameter estimation portion 110e receives the decoded image as an input from the decoding portion 112 and estimates the quantization parameter of the decoded image from the entered decoded image in accordance with a predetermined method (for example, the fourth predetermined method). Then, the estimated quantization parameter is delivered to the post-processing portion 111.

The post-processing portion 111 receives the decoded image from the decoding portion 112 and the quantization parameter from the coding parameter estimation portion 110e as inputs so as to eliminate block noise by the conventional method using the quantization parameter.

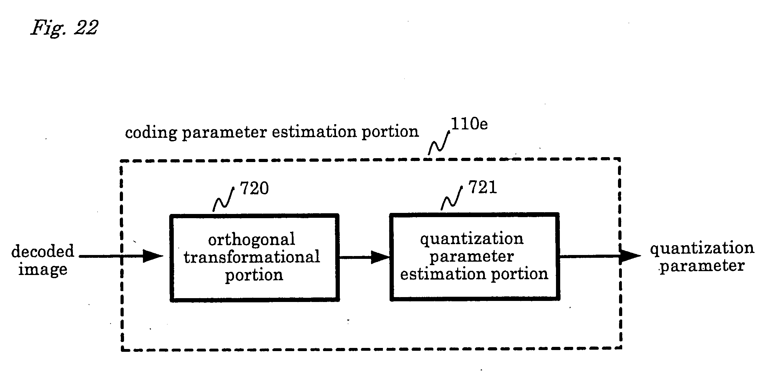

Next, a block diagram showing the internal structure of the coding parameter estimation portion 110e in this seventh embodiment is shown in Fig. 22. As shown in Fig. 22, the coding parameter estimation portion 110e has a structure in which the picture type estimation portion 421, the orthogonal transformation coefficient memory 422 and the quantization parameter memory 424 are absent from the fourth embodiment. A quantization parameter estimation portion 721 estimates the quantization parameter by using the fourth predetermined method which is the estimation method for the intra-frame coded image described in the first embodiment, and the estimated quantization parameter is sent to the post-processing portion 111.

(Effects)

By the method described above, the seventh embodiment can realize the post-processing using the quantization parameter while reducing the amount of processing and memory capacity compared with the fourth embodiment when performing the post-processing which requires the quantization parameter for a moving image including only the intra-frame coded image or a static image, because the process for estimating the picture type and the memory capacity is reduced.

Other than that, the same effects can be obtained in each portion corresponding to the first embodiment.

(Others)

Note that, though an example of the method for estimating the picture type in MPEG4 format is described in this embodiment, a similar method can be used for estimating coding parameters in H.261 or H. 263 as well as in MPEG1 or MPEG2.

In addition, as long as coding methods using the orthogonal transformation and the quantization are used, a similar method can be used for estimating the quantization parameter.

In addition, though elimination of block noise is mentioned as typical post-processing here, it can be other post-processing using the coding parameters such as elimination of mosquito noise or the like.

In addition, this method of the seventh embodiment can be realized in any one of the first through the fourth embodiments too, by extracting only the quantization parameter from the output of the coding parameter estimation portion in the first through the fourth embodiments.

Other than the first through the seventh embodiments, the present invention can be applied to the situation where it is possible to receive any one of the coding parameters including the quantization parameter that was used for coding, the picture type and the motion vector from the decoder, so as to estimate other coding parameters.

(Eighth Embodiment)

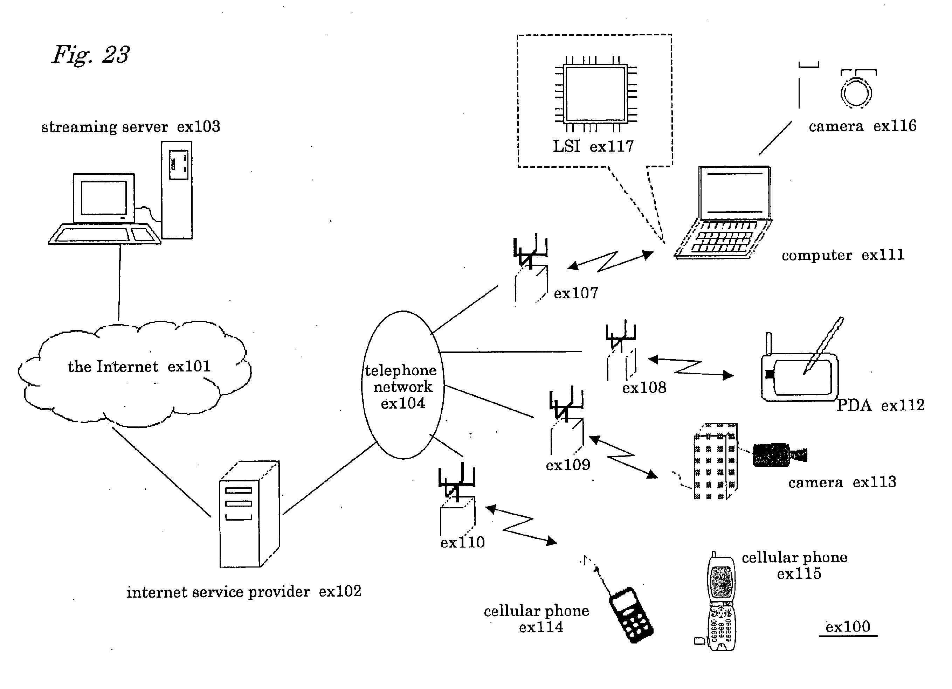

As an eighth embodiment of the present invention, application examples of an image signal processing method, an image signal processing device, an image signal processing program and an integrated circuit device, and a system using the same will be described with reference to Figs. 23-26.

Fig. 23 is a block diagram showing an overall structure of a content providing system ex100 that realizes a content delivering service. An area where a communication service is provided is divided into cells of a desired size, and base stations ex107-ex110 that are fixed radio stations are provided in the cells.

This content providing system ex100 includes a computer ex111, a personal digital assistant (PDA) ex112, a camera ex113, a cellular phone ex114, a cellular phone with camera ex115 and other equipment that are connected to the Internet ex101 for example via an internet service provider ex102, a telephone network ex104 and base stations ex107-ex110.

However, the content providing system ex100 can adopt any combination for connection without being limited to the combination shown in Fig. 23. In addition, each of the devices can be connected directly to the telephone network ex104 without the base stations ex107-ex110 that are fixed radio stations.

The camera ex113 is a device such as a digital video camera that can obtain a moving image. In addition, the cellular phone may be any type of PDC (Personal Digital Communications) method, CDMA (Code Division Multiple Access) method, W-CDMA (Wideband-Code Division Multiple Access) method, or GSM (Global System for Mobile Communications) method, or a cellular phone of PHS (Personal Handyphone System).

In addition, the streaming server ex103 is connected to the camera ex113 via the base station ex109 and the telephone network ex104, so that live delivery can be performed on the basis of coded data transmitted by a user of the camera ex113. The coding process of the obtained data may be performed by the camera ex113 or by a server for transmitting data. In addition, the moving image data obtained by the camera ex116 may be transmitted to the streaming server ex103 via the computer ex111. The camera ex116 is a device that can take a still image like a digital camera and a moving image. In this case, coding of the moving image data may be performed by the camera ex116 or by the computer ex111. In addition, the coding process may be performed by an LSI ex117 in the computer ex111 or the camera ex116. Note that it is possible to incorporate software for coding and decoding images into a storage medium (a CD-ROM, a flexible disk, a hard disk or the like) that is a recording medium readable by the computer ex111. Furthermore, the cellular phone with camera ex115 may transmit the moving image data. In this case, the moving image data is coded by the LSI in the cellular phone ex115.

In this content providing system ex100, content (for example, a moving image of a music concert) that the user is recording with the camera ex113 or the camera ex116 are coded and transmitted to the streaming server ex103, while the streaming server ex103 delivers a stream of the content data to a client who made a request. The client may be the computer ex111, the PDA ex112, the camera ex113, the cellular phone ex114 or the like that can decode the coded data. Thus, in the content providing system ex100, the client can receive and reproduce the coded data. The system can realize personal broadcasting when the client receives, decodes and reproduces the stream in real time.

In addition, reproduction of content may be performed by using the image signal processing method, the image signal processing device, the image signal processing program of the embodiment described above. For example, the computer ex111, the PDA ex112, the camera ex113 and the cellular phone ex114 may be equipped with the decoding portion, the coding parameter estimation portion and the post-processing portion, and may realize the image signal processing method and the image signal processing program. Note that the computer ex111, the PDA ex112, the camera ex113 and the cellular phone ex114 may be equipped with the decoding portion, the coding parameter estimation portion and the post-processing portion as a unit. In addition, the computer ex111, the PDA ex112, the camera ex113 and the cellular phone ex114 may be only equipped with the decoding portion which is connected to the coding parameter estimation portion and the post-processing portion.

The cellular phone will be exemplified for the following description.

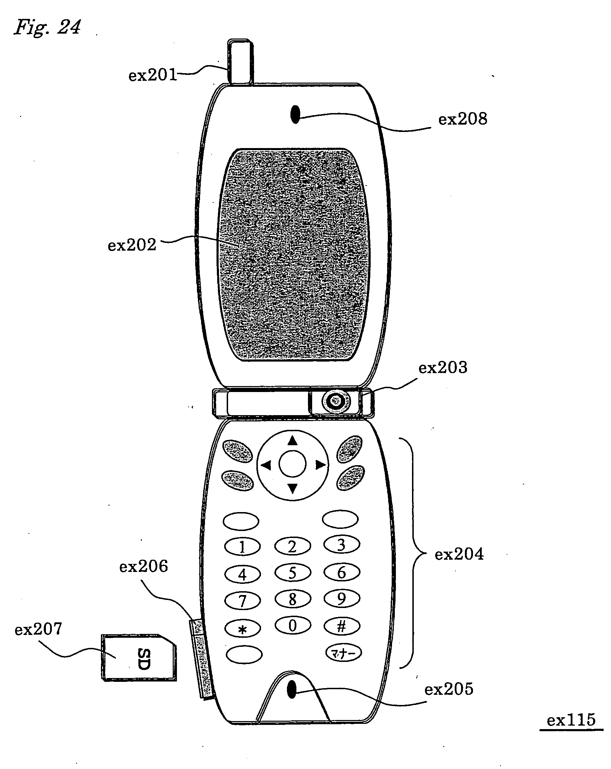

Fig. 24 shows the cellular phone ex115 that utilizes the image signal processing method, the image signal processing device and the image signal processing program of the above embodiment. The cellular phone ex115 includes an antenna ex201 for transmitting and receiving radio waves with the base station ex110, a camera portion ex203 such as a CCD camera that can take a still image, a display portion ex202 such as a liquid crystal display for displaying images obtained by the camera portion ex203 or images received by the antenna ex201 after the image data are decoded, a main body portion including a group of operating keys ex204, a sound output portion ex208 such as a speaker for producing sounds, a sound input portion ex205 such as a microphone for receiving sounds, a recording medium ex207 for storing coded data or decoded data such as data of taken moving images or still images, data of received e-mails, moving images or still images, and a slot portion ex206 that enables the recording medium ex207 to be attached to the cellular phone ex115. The recording medium ex207 such as an SD card includes a plastic case housing a flash memory element that is one type of EEPROM (Electrically Erasable and Programmable Read Only Memory) nonvolatile memory that is electronically rewritable and erasable.

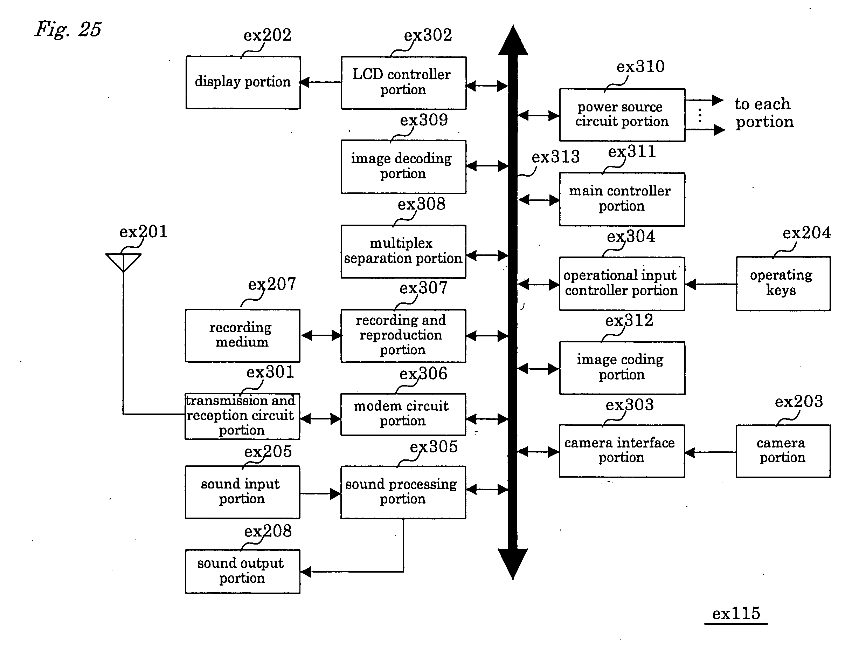

Furthermore, the cellular phone ex115 will be described with reference to Fig. 25. The cellular phone ex115 includes a main controller portion ex311 for controlling each portion of the main body portion having the display portion ex202 and the operating keys ex204, a power source circuit portion ex310, an operational input controller portion ex304, an image coding portion ex312, a camera interface portion ex303, an LCD (Liquid Crystal Display) controller portion ex302, an image decoding portion ex309, a multiplex separation portion ex308, a recording and reproduction portion ex307, a modem circuit portion ex306 and a sound processing portion ex305, which are connected to each other via a synchronizing bus ex313.

When the user turns on a clear and power key, the power source circuit portion ex310 supplies power from a battery pack to each portion so that the digital cellular phone with camera ex115 is activated.

The cellular phone ex115 converts a sound signal collected by the sound input portion ex205 during a sound communication mode into digital sound data by the sound processing portion ex305 under control of the main controller portion ex311 that includes a CPU, a ROM and a RAM. The digital sound data are processed by the modem circuit portion ex306 as a spectrum spreading process and are processed by the transmission and reception circuit portion ex301 as a digital to analog conversion process and a frequency conversion process. After that, the data are transmitted via the antenna ex201. In addition, the cellular phone ex115 amplifies a signal that is received by the antenna ex201 during the sound communication mode and performs the frequency conversion process and an analog to digital conversion process on the data, which is processed by the modem circuit portion ex306 as a spectrum reverse spreading process and is converted into a analog sound signal by the sound processing portion ex305. After that, the analog sound signal is delivered by the sound output portion ex208.

Furthermore, when transmitting electronic mail during a data communication mode, text data of the electronic mail rare entered by using the operating keys ex204 of the main body portion and are given to the main controller portion ex311 via the operational input controller portion ex304. The main controller portion ex311 performs the spectrum spreading process on the text data by the modem circuit portion ex306 and performs the digital to analog conversion process and the frequency conversion process by the transmission and reception circuit portion ex301. After that, the data are transmitted to the base station ex110 via the antenna ex201.

When transmitting image data during the data communication mode, the image data obtained by the camera portion ex203 are supplied to the image coding portion ex312 via the camera interface portion ex303. In addition, if the image data are not transmitted, it is possible to display the image data obtained by the camera portion ex203 directly by the display portion ex202 via the camera interface portion ex303 and an LCD controller portion ex302.

The image coding portion ex312 converts the image data supplied from the camera portion ex203 into the coded image data by compressing and coding the data, and the coded image data are supplied to the multiplex separation portion ex308. In addition, the cellular phone ex115 collects sounds by the sound input portion ex205 while the camera portion ex203 is taking the image, and the digital sound data is supplied from the sound processing portion ex305 to the multiplex separation portion ex308.

The multiplex separation portion ex308 performs multiplexing of the coded image data supplied from the image coding portion ex312 and the sound data supplied from the sound processing portion ex305 by a predetermined method. Multiplexed data obtained as a result are processed by the modem circuit portion ex306 as a spectrum spreading process and are processed by the transmission and reception circuit portion ex301 as a digital to analog conversion process and a frequency conversion process. After that, the data are transmitted via the antenna ex201.

When receiving moving image file data that are linked to a web page during the data communication mode, a signal received from the base station ex110 via the antenna ex201 is processed by the modem circuit portion ex306 as a spectrum reverse spreading process. Multiplexed data obtained as a result are supplied to the multiplex separation portion ex308.

In addition, in order to decode multiplexed data received via the antenna ex201, the multiplex separation portion ex308 separates a coded bit stream of image data in the multiplexed data from a coded bit stream of sound data. Then, the multiplex separation portion ex308 supplies the coded image data to the image decoding portion ex309 via the synchronizing bus ex313 and supplies the sound data to the sound processing portion ex305.

Next, the image decoding portion ex309 generates reproduction moving image data by decoding the coded bit stream of the image data and supplies the data to the display portion ex202 via the LCD controller portion ex302. Thus, the moving image data included in a moving image file that is linked to a home page can be displayed. In this case, the sound processing portion ex305 converts the sound data into an analog sound signal, which is supplied to the sound output portion ex208. Thus, sound data included in the moving image file that is linked to a home page can be reproduced.

In addition, the image decoding portion ex309 may function as the decoding portion, the coding parameter estimation portion and the post-processing portion, and realize the image signal processing method and the image signal processing program. Note that, the cellular phone ex115 may be equipped with the decoding portion, the coding parameter estimation portion and the post-processing portion as a unit. In addition, the cellular phone ex115 may be only equipped with the decoding portion which is connected to the coding parameter estimation portion and the post-processing portion.

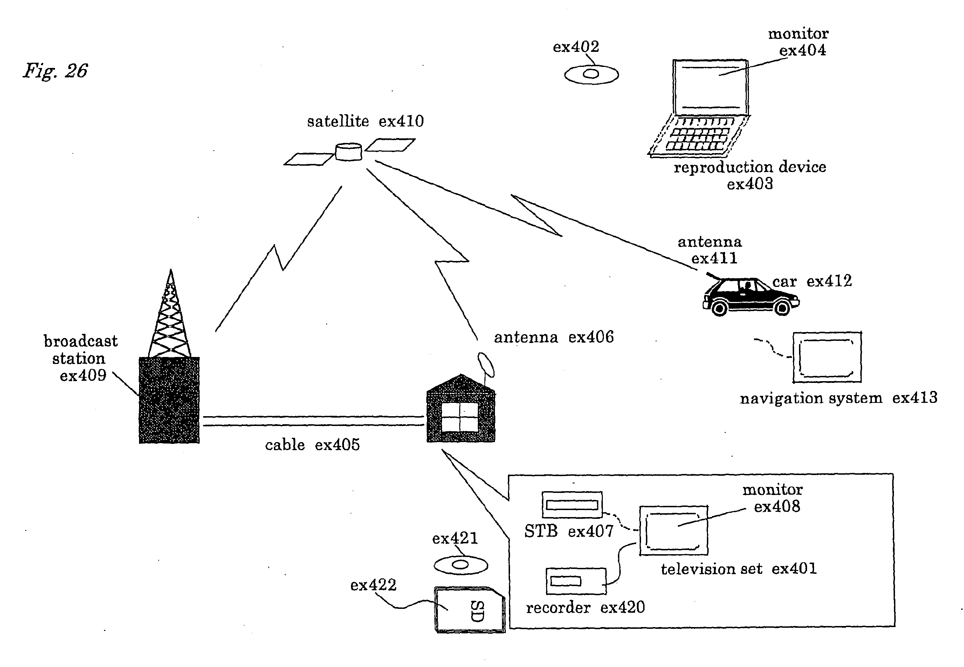

Note that the present invention is not limited to the example of the system described above. Digital broadcasting by satellite or terrestrial signals has been a recent topic of discussion. As shown in Fig. 26, the image signal processing method, the image signal processing device and the image signal processing program of the above embodiment can be incorporated into the digital broadcasting system, too. More specifically, in a broadcast station ex409, a coded bit stream of image information is sent to a communication or a broadcasting satellite ex410 via a radio wave. The broadcasting satellite ex410 that received the coded bit stream of image information sends radio waves for broadcasting. These radio waves are received by an antenna ex406 of a house equipped with a satellite broadcasting reception facility, and a device such as a television set (a receiver) ex401 or a set top box (STB) ex407 decodes the coded bit stream and reproduces the same. Here, the television set (the receiver) ex401 or the set top box (STB) ex407 may be equipped with the decoding portion, the coding parameter estimation portion and the post-processing portion of the above embodiment. In addition, it may use the image signal processing method of the above embodiment. Furthermore, it may have the image signal processing program of the above embodiment. In addition, a reproduction device ex403 for reading and decoding a coded bit stream that is recorded on a storage medium ex402 such as a CD or a DVD that is a recording medium may be equipped with the image signal processing method, the image signal processing device and the image signal processing program of the above embodiment. In this case, the reproduced image signal is displayed on a monitor ex404. In addition, it is possible to mount the image signal processing method, the image signal processing device and the image signal processing program of the above embodiment in a set top box ex407 that is connected to a cable ex405 for a cable television or the antenna ex406 for a satellite or surface wave broadcasting, so that the image can be reproduced on a monitor ex408 of the television set. In this case, it is possible to incorporate the decoding portion, the coding parameter estimation portion and the post-processing portion of the above embodiment not into the set top box but into the television set. In addition, it is possible that a car ex412 equipped with an antenna ex411 receives a signal from the broadcasting satellite ex410 or the base station ex107 and reproduces the moving image on a display of a navigation system ex413 in the car ex412.

Note that, this system may be equipped with the decoding portion, the coding parameter estimation portion and the post-processing portion as a unit. In addition, the system may be equipped with the decoding portion independently of the coding parameter estimation portion and the post-processing portion. For example, the system may process the decoded signal (which is decoded by the navigation system ex413 having the decoding portion) by utilizing the coding parameter estimation portion and the post-processing portion which is connected to the navigation system ex413. Furthermore, the system may reproduce the post-processed decoded signal on a display of the navigation system ex413.

Furthermore, it is possible to code the image signal, which is recorded in a recording medium. As a specific example, there is a recorder ex420 such as a DVD recorder for recording image signals on a DVD disk ex421 or a disk recorder for recording image signals on a hard disk. Furthermore, it is possible to record on an SD card ex422. In addition, in case that the recorder ex420 includes the image signal processing device of the above embodiment, it is possible to reproduce image signals recorded on a DVD disk ex421 or a SD card ex422 via the image signal processing device, so as to display on the monitor ex408.

Note that in the structure of the navigation system ex413 shown in Fig. 25, the camera portion ex203, the camera interface portion ex303 and the image coding portion ex312 can be omitted. This can be also applied to the computer ex111 and the television set (the receiver) ex401.

In addition, the terminal device such as the cellular phone ex114 may include three types of assemblies. A first type is a transmission and reception terminal having both the coder and the decoder, a second type is a transmission terminal having only a coder and a third type is a reception terminal having only a decoder.

Thus, the image signal processing method, the image signal processing device and the image signal processing program of the above embodiment can be used for any device and system described above, so that effects described above can be obtained.

Note that each functional block in block diagrams are typically realized as an LSI that is an integrated circuit. These may be one chip individually, and also may be one tip as a part of them or as a whole.

For example, the post-processing portion 111 and the coding parameter estimation portion 110a in Fig. 1 may be one chip. In this situation, the frame memory 124 (see Fig. 2) or the frame memory 224 (see Fig. 10) of the coding parameter estimation portion 110a may be externally connected with the chip.

In addition, the post-processing portion 111 and the coding parameter estimation portion 110b in Fig. 12 may be one chip. In this situation, the frame memory 326 (see Fig. 13) of the coding parameter estimation portion 110b may be externally connected with the chip.

In addition, the post-processing portion 111 and the coding parameter estimation portion 110c in Fig. 17 may be one chip. In this situation, the frame memory 524 (see Fig. 18) of the coding parameter estimation portion 110c may be externally connected with the chip.

In addition, the post-processing portion 111 and the coding parameter estimation portion 110d in Fig. 19 may be one chip.

In addition, the post-processing portion 111 and the coding parameter estimation portion 110e in Fig. 21 may be one chip.

The LSI may be referred to as an IC, a system LSI, a super LSI or an ultra LSI in accordance with the degree of integration.

In addition, a method for integrating circuits is not limited to an LSI but it may be realized by an application specific integrated circuit or a versatile processing unit. It is possible to use an FPGA (Field Programmable Gate Array) that is programmable after the LSI is produced or a silicon figurable processor that can restructure connection or setting of circuit cells in the LSI.

Furthermore, if another technique for integrating circuits rather than he LSI appears with the progress of semiconductor technology, then that technique may be utilized for integrating the functional blocks. Biotechnology has the potential for such technology.

In addition, in the image signal processing devices of the above embodiments, all of or a part of the process of each functional block may be realized by utilizing programs. In this case, CPUs of the image signal processing devices, for example, perform the process. Furthermore, the programs for the processes are stored in the hard disc devices or the ROMs of the image signal processing devices, and are read out to the ROMs or the RAMs of the image signal processing devises so as to be performed.

The present invention is useful for a device that reproduces a received image or a stored image in the fields of broadcasting or communication. In addition, it can be also applied to a device for displaying a static image.

**Claims**

1. An image signal processing method for performing post-processing for a decoded image obtained by decoding a code sequence, the code sequence being generated by coding an image signal by using a method including orthogonal transformation and quantization, the image signal processing method comprising the steps of:

   (a) estimating coding parameters that were used for coding from the decoded image; and
   (b) performing the post-processing for the decoded image by using the estimated coding parameters.

2. The image signal processing method according to claim 1, wherein the estimated coding parameters include at least one of a quantization parameter that was used for the quantization, a picture type of the decoded image and a motion vector of the decoded image.

3. The image signal processing method according to claim 2, wherein the estimated coding parameters include the quantization parameter, and
   step (a) includes estimating the quantization parameter in accordance with an occurrence frequency of each level in orthogonal transformation coefficients of the decoded image.

4. The image signal processing method according to claim 3, wherein step (a) includes estimating the quantization parameter by using a level having the highest occurrence frequency in the orthogonal transformation coefficients.

5. The image signal processing method according to any one of claims 2-4, wherein the estimated coding parameters includes the picture type, and
   step (a) includes estimating the picture type by comparing an occurrence frequency of each level in the orthogonal transformation coefficients of the decoded image with an occurrence frequency of each level in the orthogonal transformation coefficients of a previous decoded image.

6. The image signal processing method according to any one of claims 2-5, wherein the estimated coding parameters include the quantization parameter and the picture type, and

step (a) includes switching between estimation methods for estimating the quantization parameter in accordance with the picture type.

7. The image signal processing method according to any one of claims 2-6, wherein the estimated coding parameters include the picture type and the motion vector, and

step (a) includes switching between estimation methods for estimating the motion vector in accordance with the picture type.

8. The image signal processing method according to any one of claims 2-7, wherein the estimated coding parameters include the quantization parameter, the picture type and magnitude of the motion vector, and

step (a) includes switching between estimation methods for estimating the quantization parameter in accordance with the picture type and a size of the motion vector.

9. The image signal processing method according to any one of claims 2-7, wherein the estimated coding parameters include the quantization parameter and the picture type, and

step (a) includes estimating the quantization parameter in accordance with a distribution of orthogonal transformation coefficients of the decoded image if the picture type is an intra-frame coded image.

10. The image signal processing method according to any one of claims 2-7 and 9, wherein the estimated coding parameters include the quantization parameter, the picture type and the motion vector, and

step (a) includes estimating the quantization parameter in accordance with a distribution of orthogonal transformation coefficients of a differential image that is generated by using the decoded image, a previous decoded image and the motion vector if the picture type is an inter-frame coded image.

11. The image signal processing method according to any one of claims 2-7 and 9-10, wherein the estimated coding parameters include the motion vector, and

step (a) includes estimating a candidate motion vector which is a motion vector that is a candidate as the motion vector, if an occurrence frequency of each level in orthogonal transformation coefficients of a differential image has periodical peaks, the differential image being generated by using the decoded image, a previous decoded image and the candidate motion vector.

12. The image signal processing method according to any one of claims 2-6, wherein the estimated coding parameters include the quantization parameter and the picture type, and

step (a) includes switching among estimation methods for estimating the quantization parameter in accordance with the picture type and a motion quantity that is determined by the decoded image and a previous decoded image.

13. The image signal processing method according to any one of claims 1-12, wherein the post-processing includes a process for eliminating a block noise by using the estimated coding parameters.

14. The image signal processing method according to any one of claims 1-13, wherein the post-processing includes a process for eliminating a mosquito noise by using the estimated coding parameters.

15. An image signal processing device for performing post-processing for a decoded image obtained by decoding a code sequence, the code sequence being generated by coding an image signal by using a method including orthogonal transformation and quantization, the device comprising:

a coding parameter estimation unit operable to estimate coding parameters that were used for coding from the decoded image; and
a post-processing unit operable to perform the post-processing for the decoded image by using the estimated coding parameters.

16. The image signal processing device according to claim 15, wherein the coding parameter estimation unit includes an orthogonal transformation unit operable to perform an orthogonal transformation for the decoded image and a memory unit operable to store orthogonal transformation coefficients of the decoded image.

17. An image signal processing program for a computer to execute an image signal processing method for performing post-processing for a decoded image obtained by decoding a code sequence, the code sequence being generated by coding an image signal by using a method including orthogonal transformation and quantization, the image signal processing program causing the computer to execute the image signal processing method comprising the steps of:

(a) estimating coding parameters that were used for coding from the decoded image; and
(b) performing the post-processing for the decoded image by using the estimated coding parameters.

**18.** An integrated circuit device for performing post-processing for a decoded image obtained by decoding a code sequence, the code sequence being generated by coding an image signal by using a method including orthogonal transformation and quantization, the device comprising:

a coding parameter estimation circuit operable to estimate coding parameters that were used for coding from the decoded image; and
a post-processing circuit operable to perform the post-processing for the decoded image by using the estimated coding parameters.

EP 1 534 016 A2

*Fig. 1*

code sequence → decoding portion (112) → decoded image → post-processing portion (111) → output image

coding parameter estimation portion (110a) → motion vector, quantization parameter, picture type → post-processing portion

*Fig. 2*

coding parameter estimation portion ⌐110a

```
                        ┌─────────────────┐
                        │  frame memory   │〜124
                        └────────┬────────┘
                                 │
                                 ▼
                        ┌─────────────────┐  〜123
         ──────────────▶│  motion vector  │──────────────▶ motion vector
                        │   estimation    │
                        │    portion      │
                        └─────────────────┘
                                 │
                        〜125     ▼
                        ┌─────────────────┐
                        │  quantization   │──────────────▶ quantization
                        │   parameter     │                parameter
                        │   estimation    │      〜126
                        │    portion      │  ┌──────────────┐
                        └─────────────────┘  │ quantization │
  120                                        │  parameter   │
   〜                                        │   memory     │
 ┌──────────────┐    ┌─────────────────┐     └──────────────┘
 │  orthogonal  │    │  picture type   │──────────────▶ picture type
 │transformation│───▶│   estimation    │
 │   portion    │    │    portion      │〜121
 └──────────────┘    └─────────────────┘
                        〜122  ▲
                     ┌─────────────────┐
                     │   orthogonal    │
                     │ transformation  │
                     │   coefficient   │
                     │     memory      │
                     └─────────────────┘
```

decoded image

EP 1 534 016 A2

EP 1 534 016 A2

Fig. 3

EP 1 534 016 A2

*Fig. 4*

DCT coefficients

*Fig. 5*

```
        ( start )
           │
           ▼
```

S10

Calculate the absolute differential value between
the occurrence frequency in the previous decoded
image and the occurrence frequency in the
present decoded image for all DCT coefficient
values, and calculate a sum value ABS of them

S11

Sum value ABS is
above TH1 ?

Yes

S12

Count Pre_dct_zero which is the
number of DCT coefficients whose
occurrence frequency is zero in the
previous decoded image

S13

Count dct_zero which is the
number of DCT coefficients whose
occurrence frequency is zero in the
present decoded image

S14

dct_zero > Pre_dct_zero ?

No

No

Yes

S15

Estimate to be the intra-frame coded
image

S16

Estimate to be the inter-frame
coded image

( end )

*Fig. 6*

```
                    ┌──────────────┐
                    │    start     │
                    └──────┬───────┘
                           │
                           ▼
S20                    ╱───────────────────╲
 ⁀                    ╱  Is the picture type  ╲      No
                     ╱   the intra-frame        ╲──────────────┐
                     ╲   coded image ?          ╱              │
                      ╲                        ╱               │
                       ╲────────┬─────────────╱                │
                           Yes  │                              │
S21                             │           S22                │
 ⁀                              ▼            ⁀                 ▼
┌───────────────────────────────────┐  ┌───────────────────────────────────┐
│  The method for estimating the    │  │  The method for estimating the    │
│  quantization parameter for the   │  │  quantization parameter for the   │
│  intra-frame coded image          │  │  inter-frame coded image          │
└─────────────────┬─────────────────┘  └─────────────────┬─────────────────┘
                  │                                       │
                  │◄──────────────────────────────────────┘
                  ▼
          ┌──────────────┐
          │     end      │
          └──────────────┘
```

*Fig. 7*

```
                    ╭─────────────╮
                    │    start    │
                    ╰─────────────╯
                           │
                           ▼
  S21a            ┌──────────────────┐
   ⌇              │  Search the DCT  │
                  │ coefficient DCTmax│
                  │  having a highest │
                  │occurrence frequency│
                  └──────────────────┘
                           │
                           ▼
  S21b                  ╱──────╲
   ⌇               ╱Is the DCTmax divisible╲
                  ╲   by three ?           ╱──────────┐
                      ╲──────╱                        │
                         │                            No
                        Yes                           │
  S21c                   │          S21d              ▼
   ⌇                     ▼            ⌇
              ┌──────────────────┐      ┌──────────────────────┐
              │    Estimate      │      │      Estimate         │
              │ QP=DCTmax / 3    │      │ QP=(DCTmax+1) / 3     │
              └──────────────────┘      └──────────────────────┘
                       │                            │
                       │◄───────────────────────────┘
                       ▼
                ╭─────────────╮
                │     end     │
                ╰─────────────╯
```

*Fig. 8*

```
                         ┌─────────┐
                         │  start  │
                         └─────────┘
                              │
                              ▼
S22a
 ∿
           Is the magnitude of the motion
           vector smaller than TH2 ?              No
                                                   │
                                                   ▼
                                                         S22c
                                                          ∿
                     │Yes
                     ▼
S22b                                    ┌──────────────────────────┐
 ∿                                      │ Regard the value obtained│
┌─────────────────────────┐            │ by adding a motion quantity│
│ Regard the quantization │            │ Mov(E) corresponding to the│
│ parameter PastQP as the │            │ magnitude of the motion  │
│ estimated quantization  │            │ vector E to the quantization│
│ parameter               │            │ parameter PastQP as the  │
└─────────────────────────┘            │ estimated quantization   │
                     │                  │ parameter                │
                     │                  └──────────────────────────┘
                     ▼
                ┌─────────┐
                │   end   │
                └─────────┘
```

Fig. 9

Fig. 10

coding parameter estimation portion

110a

frame memory  224

motion vector estimation portion  223

→ motion vector

candidate motion vector

differential image calculation portion  225

quantization parameter estimation portion  226

→ quantization parameter

decoded image →

orthogonal transformation portion  220

picture type estimation portion  221

→ picture type

orthogonal transformation coefficient memory  222

EP 1 534 016 A2

*Fig. 11*

```
                    ( start )
S30                     │
 ∿                      ▼
        ┌───────────────────────────────┐
        │  DCT for the decoded image     │
        └───────────────────────────────┘
S31                     │
 ∿                      ▼
        ┌───────────────────────────────┐
        │  Estimate the picture type     │
        └───────────────────────────────┘
                        │
                        ▼
S32                  ◇─────────◇
 ∿          Is the picture type
         the intra-frame coded image ?          No
            ◇─────────────────────────◇──────────────┐
                        │                             │
                        │                             ▼
                        │            ┌────────────────────────────────┐  S34
                        │            │  Estimate the motion vector     │   ∿
                        │            └────────────────────────────────┘
                        │                             │                   No
                        │                             ▼
                        │            ┌────────────────────────────────┐  S35
                        │            │  Calculate the differential     │   ∿
                        │            │         image                   │
                        │            └────────────────────────────────┘
                        │                             │
                        │                             ▼
                        │            ┌────────────────────────────────┐  S36
                        │            │  DCT for the differential        │   ∿
                        │            │         image                   │
                        │            └────────────────────────────────┘
                        │                             │
                     Yes│                             ▼
                        │                  ◇───────────────────◇   S37
                        │             Is the occurrence distribution    ∿
                        │             of the DCT coefficients of the
                        │             differential image periodical ?
                        │                  ◇───────────────────◇
S33                     │                        │
 ∿                      │◄──────── Yes ──────────┘
        ┌───────────────────────────────┐
        │  Estimate the quantization      │
        │         parameter              │
        └───────────────────────────────┘
                        │
                        ▼
                    (  end  )
```

31

EP 1 534 016 A2

*Fig. 12*

code sequence → [decoding portion] 112

→ decoded image →

[post-processing portion] 111 → output image

quantization parameter | picture type

[coding parameter estimation portion] 110b

*Fig. 13*

coding parameter estimation portion — 110b

- frame memory — 326
- motion vector estimation portion — 325
- quantization parameter estimation portion — 323
- quantization parameter memory — 324
- orthogonal transformation portion — 320
- picture type estimation portion — 321
- orthogonal transformation coefficient memory — 322

decoded image

quantization parameter

picture type

EP 1 534 016 A2

*Fig. 14*

start

S40 Is the picture type the intra-frame coded image ?

— No → S42 Regard the quantization parameter PastQP estimated from the previous decoded image plus a value $\alpha$ corresponding to the SAD as the estimated quantization parameter

— Yes → S41 Estimate the quantization parameter from the DCT coefficients

end

*Fig. 15*

coding parameter estimation portion

110b

decoded image → orthogonal transformation portion (420)

→ picture type estimation portion (421)

quantization parameter estimation portion (423) → quantization parameter

quantization parameter memory (424)

→ picture type

orthogonal transformation coefficient memory (422)

EP 1 534 016 A2

*Fig. 16*

```
                    ┌──────────────┐
                    │    start     │
                    └──────────────┘
                            │
                            ▼
         S50          ╱╲
          ∿         ╱    ╲
               ╱                ╲
            ╱   Is the picture type  ╲
          ⟨  the intra-frame coded image? ⟩────────── No
            ╲                     ╱                    │
               ╲               ╱                       │
                  ╲         ╱                          │
                     ╲   ╱                             │
                      ╲╱                               │
                       │                               │
                     Yes                               │
         S51           │            S52                │
          ∿            │             ∿                 │
    ┌──────────────────▼──┐   ┌──────────────────────▼──────────┐
    │   Estimate the      │   │  Regard the quantization parameter │
    │   quantization      │   │  PastQP estimated from the previous│
    │ parameter from the  │   │  decoded image as the estimated value│
    │  DCT coefficients   │   │                                  │
    └─────────────────────┘   └──────────────────────────────────┘
                 │                           │
                 │                           │
                 ◄───────────────────────────┘
                 │
                 ▼
         ┌──────────────┐
         │     end      │
         └──────────────┘
```

EP 1 534 016 A2

*Fig. 17*

code sequence → **decoding portion** (112) → decoded image → **post-processing portion** (111) → output image

decoding portion → coding parameter estimation portion (110c)

coding parameter estimation portion → motion vector → post-processing portion

coding parameter estimation portion → picture type → post-processing portion

EP 1 534 016 A2

*Fig. 18*

coding parameter estimation portion    $\sim$ 110c

524 — frame memory

523 — motion vector estimation portion → motion vector

decoded image →

520 — orthogonal transformation portion

521 — picture type estimation portion → picture type

522 — orthogonal transformation coefficient memory

*Fig. 19*

code
sequence

112

decoding portion

decoded
image

post-processing
portion

111

output
image

picture
type

coding parameter
estimation portion

110d

EP 1 534 016 A2

*Fig. 20*

coding parameter estimation portion 110d

decoded image → **orthogonal transformation portion** (620) → **picture type estimation portion** (621) → picture type

**orthogonal transformation coefficient memory** (622) → (picture type estimation portion)

*Fig. 21*

code sequence → decoding portion (112) → decoded image → post-processing portion (111) → output image

coding parameter estimation portion (110e) → quantization parameter → post-processing portion

*Fig. 22*

coding parameter estimation portion $\quad\nearrow^{110e}$

decoded image → | orthogonal transformational portion (720) | → | quantization parameter estimation portion (721) | → quantization parameter

EP 1 534 016 A2

*Fig. 23*

streaming server ex103

LSI ex117

camera ex116

computer ex111

ex107

the Internet ex101

telephone
network
ex104

ex108

PDA ex112

ex109

camera ex113

internet service provider ex102

ex110

cellular phone
ex115

cellular phone
ex114

ex100

EP 1 534 016 A2

*Fig. 24*

ex201

ex208

ex202

ex203

ex206

ex207

SD

ex204

ex205

ex115

EP 1 534 016 A2

Fig. 25

ex115

Fig. 26

ex402

monitor
ex404

satellite ex410

reproduction device
ex403

antenna
ex411

car ex412

broadcast
station
ex409

antenna ex406

navigation system ex413

cable ex405

monitor
ex408

STB ex407

ex421

television set ex401

ex422

SD

recorder ex420

*Fig. 27*